(19) Europäisches Patentamt
European Patent Office
Office européen des brevets

(11) **EP 3 243 042 B1**

(12) **FASCICULE DE BREVET EUROPEEN**

(45) Date de publication et mention
de la délivrance du brevet:
**24.10.2018 Bulletin 2018/43**

(51) Int Cl.:
***G01D 5/26*** (2006.01)    ***G01H 9/00*** (2006.01)
***G01D 5/353*** (2006.01)

(21) Numéro de dépôt: **16700201.3**

(22) Date de dépôt: **08.01.2016**

(86) Numéro de dépôt international:
**PCT/EP2016/050304**

(87) Numéro de publication internationale:
**WO 2016/110581 (14.07.2016 Gazette 2016/28)**

(54) **CAPTEUR A FIBRE OPTIQUE**

FASEROPTISCHER SENSOR

OPTICAL FIBRE SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.01.2015 FR 1500033**

(43) Date de publication de la demande:
**15.11.2017 Bulletin 2017/46**

(73) Titulaires:
• **Thales**
**92400 Courbevoie (FR)**
• **CENTRE NATIONAL DE LA RECHERCHE SCIENTIFIQUE**
**75016 Paris (FR)**
• **Université Nice - Sophia Antipolis**
**06103 Nice (FR)**

(72) Inventeurs:
• **HUIGNARD, Jean-Pierre**
**75013 Paris (FR)**
• **BORTOLOZZO, Umberto**
**06160 Juan Les Pins (FR)**
• **DOLFI, Daniel**
**91767 Palaiseau Cedex (FR)**
• **MOLIN, Stéphanie**
**91767 Palaiseau Cedex (FR)**

• **PEIGNE, Arnaud**
**06903 Sophia Antipolis (FR)**
• **RESIDORI, Stefania**
**06160 Juan Les Pins (FR)**

(74) Mandataire: **Esselin, Sophie et al**
**Marks & Clerk France**
**Conseils en Propriété Industrielle**
**Immeuble Visium**
**22 avenue Aristide Briand**
**94117 Arcueil Cedex (FR)**

(56) Documents cités:
**US-A- 4 320 475        US-A- 4 536 861**
**US-A1- 2011 320 147**

• **R. BOUFFARON ET AL: "All-optical acoustic array for underwater surveillance", PROCEEDINGS OF SPIE, vol. 8794, 20 mai 2013 (2013-05-20), page 87940N, XP055133779, ISSN: 0277-786X, DOI: 10.1117/12.2025798**
• **BORTOLOZZO U ET AL: "Beam coupling in photorefractive liquid crystal light valves; Photorefractive liquid crystal light valves", JOURNAL OF PHYSICS D: APPLIED PHYSICS, INSTITUTE OF PHYSICS PUBLISHING LTD, GB, vol. 41, no. 22, 21 novembre 2008 (2008-11-21), page 224007, XP020141029, ISSN: 0022-3727, DOI: 10.1088/0022-3727/41/22/224007**

EP 3 243 042 B1

**Description**

Le domaine de l'invention est celui des capteurs à fibre optique. Plus précisément, il concerne des capteurs aptes à détecter une excitation à proximité de la fibre, pouvant également localiser cette excitation le long de la fibre en environnement bruité.

Ce type de capteur trouve de nombreuses applications en tant notamment que capteur de pression, permettant par la détection de modulation de la phase d'une onde optique de détecter des variations d'environnement. Un des domaines d'application dans lequel, ce type de détection est particulièrement d'intérêt est la détection sous-marine.

Et la détection sous-marine des ondes sonores est d'une importance fondamentale pour la surveillance des côtes et certaines applications militaires (ex. détection/identification des sous-marins et navires de surface, les détections de plongeurs ou de drones ...) ainsi que pour des applications civiles (bioacoustique, contrôle de l'activité sismique sous-marine, détection de bruit dans l'environnement,...). A cette fin, les capteurs à fibre optique sont largement utilisés à la fois pour leur sensibilité et leur compacité. Les plus sensibles sont basés sur des réseaux de Bragg, actifs (lasers) ou passifs, couplés à un transducteur mécanique qui convertit la pression radiale de l'onde acoustique en élongation de la fibre conduisant à un changement de phase ou de longueur d'onde optique. Les capteurs laser à fibre à contre-réaction distribuée (DFB-FL) sont capables de détecter le picostrain i.e. des variations relatives de $\Delta L/L \sim 10^{-12}$ comme décrit dans l'article de « All-optical acoustic array for underwater surveillance", R. Bouffaron et al., PROCEEDINGS OF SPIE, Volume 8794, paper 8794-36, Fifth European Workshop on Optical Fibre Sensors, Krakow 2013 »

Cependant, les capteurs et systèmes basés sur des réseaux de Bragg sont intrinsèquement sensibles aux variations de l'environnement (typiquement température, pression statique), ce qui pose de fortes contraintes sur la conception des capteurs et/ou systèmes.

D'autre part, pour détecter la modulation de phase optique associée, des mesures interférométriques précises doivent être effectuées, qui sont souvent une limitation à la mise en oeuvre pratique des systèmes, en particulier lorsque la détection doit être exécutée dans un environnement fluctuant. En effet, dans ce cas, des asservissements souvent lourds doivent être mis en oeuvre sur les interféromètres conventionnels pour maintenir la quadrature, c'est-à-dire, la condition de détection optimale qui permet de maximiser la sensibilité du capteur.

Pour répondre aux besoins de ce type d'applications, nécessitant des sensibilités extrêmes à la grandeur à mesurer et une relative insensibilité aux perturbations environnementales du système de lecture, les Demandeurs ont proposé dans la demande de brevet FR 1302640 d'utiliser la grande sensibilité à un changement de phase fournie par l'holographie adaptative, obtenue par mélange à deux ondes, dans une valve optique à cristaux liquides, LCLV pour « Liquid Crystal Light Valve » en terminologie anglo-saxonne, connue dans l'état de la technique pour sa capacité à réaliser des hologrammes par transformation de la variation d'intensité d'une figure d'interférence en variation d'indice du cristal liquide, induisant ainsi une variation de phase optique. Typiquement, la LCLV comprend une fine couche de cristal liquide LC, typiquement d'épaisseur comprise entre 10 et 200 $\mu$m, disposée entre deux substrats, un des substrats comprenant un matériau photoconducteur PC apte à transformer la lumière provenant de N longueurs d'onde d'émission $\lambda i$ en charge. Par exemple la couche de cristaux liquides est située entre un substrat de verre et un substrat consistant en un cristal photoconducteur, par exemple un cristal de BSO, sensible dans les longueurs d'onde bleu/vert, des électrodes étant déposées sur les substrats.

Outre sa sensibilité, la bande-passante de ce dispositif de détection permet de filtrer les fluctuations lentes et de réaliser un capteur insensible aux variations des conditions environnementales. De plus, ce dispositif de détection est couplé à un capteur à fibre optique multimode, plus sensible à l'élongation qu'une fibre monomode, permettant par conséquent de simplifier la partie sensible, voire de s'affranchir du transducteur.

Cette solution présente néanmoins un inconvénient résidant dans le fait que le coeur de l'interféromètre est une valve optique à cristaux liquides ne permettant pas d'optimiser indépendamment l'écriture et la lecture de l'hologramme (adapté la longueur d'onde de travail par exemple), ni d'insérer une étape de traitement du signal dans l'interféromètre.

Le document US 4 536 861 A divulgue un autre capteur à fibre optique pour détecter une excitation à proximité d'un ensemble fibre optique.

Pour pallier les inconvénients précités, les Demandeurs proposent un nouveau capteur à fibre optique utilisant de l'holographie digitale, remplaçant et dissociant ainsi la valve à cristal liquide par une caméra et un modulateur spatial de lumière à cristal liquide.

Plus précisément, la présente invention a pour objet un capteur à fibre optique pour détecter une excitation à proximité d'un ensemble fibre optique, ladite excitation induisant une modulation de la phase d'un signal optique se propageant dans ledit ensemble fibre optique, ledit capteur comprenant :

- un ensemble laser d'au moins un laser, ledit ensemble laser étant configuré pour émettre au moins un faisceau laser ;
- un ensemble fibre optique présentant une première extrémité et une seconde extrémité ;
- un système optique configuré pour :

  ○ injecter par ladite première ou ladite seconde extrémité, au moins une partie dudit faisceau laser ;

○ recevoir par ladite première extrémité, au moins un faisceau signal issu de la partie du faisceau laser injecté et propagé dans ledit ensemble fibre ;

○ générer au moins un faisceau de référence à partir dudit faisceau laser ou dudit faisceau signal ;

○ réaliser au moins une zone d'interférence correspondant à l'interférence entre une partie du faisceau de référence et une partie du faisceau signal ;

- un ensemble d'holographie digitale comprenant :

○ un modulateur spatial de lumière à cristal liquide configuré pour recevoir une partie du faisceau signal et une partie du faisceau de référence ;

○ une caméra configurée pour recevoir ladite zone d'interférence générant une figure d'interférence, ladite figure d'interférence étant adressée électriquement sur ledit modulateur spatial de lumière à cristal liquide pour y créer un hologramme de phase lui correspondant ;

- au moins un détecteur optique configuré pour détecter un faisceau signal optique de sortie résultant :

○ de la diffraction de ladite partie du faisceau signal et/ou de ladite partie du faisceau de référence reçue(s) par l'hologramme inscrit dans ledit modulateur spatial de lumière à cristal liquide et

○ de la transmission de ladite partie du faisceau référence et /ou de ladite partie du faisceau signal transmise(s) par ledit modulateur spatial de lumière à cristal liquide;

- une unité de traitement, en sortie dudit détecteur optique pour traiter ledit faisceau signal optique de sortie permettant d'extraire une information relative à ladite excitation.

Selon une variante de l'invention, l'ensemble fibre est multimode, permettant d'augmenter la sensibilité à la contrainte.

Selon des variantes de l'invention, le capteur à fibre optique comprend des premiers moyens pouvant être un premier modulateur acousto-optique pour générer des impulsions optiques depuis ledit laser.

Selon la présente invention, la réalisation d'un interféromètre adaptatif permet à la fois de démoduler un front d'onde complexe issu de l'ensemble fibre optique et de filtrer les perturbations basse fréquence de l'environnement. L'utilisation d'une caméra permet de détecter la figure d'interférence, et le modulateur spatial de lumière à cristal liquide permet la lecture de la phase.

Selon une variante de l'invention, il est prévu une lame séparatrice pour séparer le faisceau signal et le faisceau de référence en deux parties, une première partie desdits faisceaux étant dirigée sur ladite caméra, la seconde partie desdits faisceaux étant dirigée sur le modulateur spatial de lumière à cristal liquide.

Le capteur à fibre optique peut avantageusement comporter une unité de traitement, pour traiter en sortie de ladite caméra ladite figure d'interférence et l'adresser audit modulateur spatial de lumière à cristal liquide. Le traitement mis en oeuvre peut être typiquement du filtrage spatial et/ou temporel. En effet, selon l'invention, le codage digital de la phase permet à la fois d'optimiser indépendamment l'écriture et la lecture du réseau de phase et d'insérer une étape de traitement du signal.

Selon des variantes de l'invention, le faisceau signal reçu par ladite première extrémité est issu d'un faisceau introduit au niveau de ladite seconde extrémité et propagé en transmission dans ledit ensemble fibre optique.

Selon des variantes de l'invention, le faisceau signal reçu par ladite première extrémité est issu d'un faisceau introduit au niveau de ladite première extrémité et rétrodiffusé dans ledit ensemble fibre optique.

Selon des variantes de l'invention, le modulateur spatial de lumière à cristal liquide fonctionne en réflexion.

L'invention a aussi pour objet un capteur à fibre optique fonctionnant en rétrodiffusion et comportant avantageusement des moyens permettant de localiser ladite excitation.

Selon des variantes, une première partie du faisceau laser est modulée temporellement avant d'être introduite dans l'ensemble fibre optique, une seconde partie du faisceau laser constituant le faisceau laser de référence sans être modulée temporellement, l'arrivée séquentielle des impulsions permettant la localisation de ladite excitation au niveau de l'ensemble fibre optique . Connaissant la vitesse v de propagation de l'onde lumineuse dans la fibre optique, la mesure de la durée dt d'un aller-retour d'une impulsion permet de déterminer à quelle distance Li dans la fibre repérée depuis l'extrémité $E_1$, celle-ci a été rétrodiffusée : $2xLi = vxdt$ .

Selon des variantes de l'invention, le faisceau de référence est généré à partir dudit faisceau signal en sortie de ladite première extrémité et comprend des moyens pour créer une différence de marche sur ledit faisceau de référence.

Selon des variantes de l'invention, le capteur à fibre optique comporte au moins :

- un circulateur positionné :

○ en sortie dudit ensemble optique comprenant au moins un laser ;
○ en entrée de l'ensemble fibre optique ;
○ en entrée dudit modulateur spatial de lumière à cristal liquide ;

- un coupleur situé en sortie dudit ensemble fibre optique pour créer deux voies optiques porteuses d'impulsions optiques de sortie ;
- des moyens pour retarder lesdites impulsions de sortie de dudit ensemble fibre optique sur l'une desdites deux voies de manière à créer une voie signal porteuse d'impulsions optiques signal et une voie de référence porteuse d'impulsions optiques de référence pour générer lesdites zones d'interférences sur ledit modulateur spatial de lumière.

Selon des variantes de l'invention, le capteur comporte en outre :

- des seconds moyens pouvant être un second modulateur acousto-optique situé en sortie du circulateur et en entrée du coupleur permettant de sélectionner des portes de durée $2\Delta L/c$ avec c la vitesse de la lumière dans le vide et $\Delta L/2$ la longueur d'une zone sensible définie entre une position $A_i$ et une position $B_i$ au niveau dudit ensemble fibre optique et référencée depuis ladite première extrémité, pour ne laisser interférer que des ondes rétrodiffusées provenant d'une zone sensible de ladite fibre à la fois ;
- les moyens pour retarder lesdites impulsions de sortie introduisant une longueur supplémentaire à parcourir $\Delta L$ ;
- les impulsions étant séparées d'une durée $t_R$, telle que $t_R > 2L/c$, la durée desdites impulsions $t_p$ étant $t_p > \Delta L/c$ et $t_R > t_{off}$ avec $t_{off}$, le temps de réponse des cristaux liquides.

Selon des variantes de l'invention, le capteur comprend en outre :

- un ensemble laser dit d'écriture comprenant au moins un laser émettant une série d'impulsions dites d'écriture à une fréquence de pompe $\omega_p$ et un faisceau laser émettant une série d'impulsions dites d'écriture à une fréquence signal $\omega_s$ différente de la fréquence $\omega_p$ ;
- le système optique étant configuré :

  ◦ pour injecter par ladite première extrémité lesdites séries d'impulsions d'écriture aux fréquences $\omega_p$ et $\omega_s$, inscrivant au moins un élément de réseau Brillouin $RB_i$ dans ladite fibre optique ;
  ◦ pour injecter ladite série d'impulsions issues dudit ensemble optique comportant au moins un laser émettant à une longueur d'onde $\lambda_s$ correspondant à un faisceau laser de lecture à ladite fréquence signal $\omega_s$ ;
  ◦ la position $Z_r$ de l'écriture dudit élément de réseau Brillouin étant référencée par rapport à la seconde extrémité de ladite fibre et étant réglée par le décalage temporel entre deux impulsions d'écriture aux fréquences $\omega_p$ et $\omega_s$.

Selon des variantes de l'invention, l'ensemble laser d'écriture comprend :

- ledit laser émettant un faisceau laser ;
- des moyens pour diviser ledit faisceau en deux voies ;
- des moyens pour décaler la fréquence pompe $\omega_p$ vers une fréquence signal $\omega_s$ sur l'une des voies ;
- des moyens pour générer des impulsions sur les deux voies optiques décalées en fréquence pouvant être de type modulateurs acousto-optiques.

Selon des variantes de l'invention, ledit système optique est configuré pour que ledit faisceau de référence ou lesdites impulsions de référence interfère(nt) en entrée dudit modulateur à cristal liquide sans avoir été injecté(es) dans ledit ensemble fibre optique avec lesdites impulsions optiques signal ($I_{psiS}$), issues desdites impulsions optiques injectées puis propagées dans ladite fibre.

Selon des variantes de l'invention, ledit système optique est configuré pour que ledit faisceau de référence ou lesdites impulsions de référence interfère(nt) en entrée dudit modulateur à cristal liquide en ayant été injecté(es) dans ledit ensemble fibre optique avec lesdites impulsions optiques signal, issues desdites impulsions optiques injectées puis propagées dans ladite fibre.

Selon des variantes de l'invention, le capteur à fibre optique pour localiser une excitation à proximité d'un ensemble fibre optique fonctionne en réflexion et comprend :

- un ensemble laser configuré pour émettre N faisceaux laser $F_i$ indicés i avec i > 1 de longueur d'onde respective $\lambda_i$ ;
- un ensemble fibre optique comportant N tronçons successifs indicés i, chaque tronçon comprenant un dispositif de réflexion sélectif $M_i$ d'une longueur d'onde d'émission associée $\lambda_i$, les indices étant repérés par rapport à une extrémité dudit ensemble fibre optique ;

- le système optique générant N faisceaux de référence $F_{ri}$ indicés i de longueur d'onde d'émission $\lambda_i$ à partir d'un faisceau laser $F_i$ et réalisant N zones d'interférences indicées i, chaque zone correspondant à l'interférence entre un faisceau de référence $F_{ri}$ et un faisceau signal $F_{si}$ de même longueur d'onde d'émission $\lambda_i$ ;
- au moins un détecteur optique configuré pour détecter N signaux optiques de sortie $F_{out}i$ indicés i diffractés respectivement par lesdits N hologrammes ;
- une unité de traitement adaptée pour identifier le tronçon dudit ensemble fibre optique situé à proximité de ladite excitation à localiser, à partir des N signaux optiques de sortie $F_{out}i$ détectés.

Selon des variantes de l'invention, le capteur à fibre optique pour localiser une excitation à proximité d'un ensemble fibre optique comporte :

- un ensemble laser émettant un faisceau laser continu à une fréquence f ;
- des moyens de balayage périodique en fréquence de ladite fréquence f dans une bande de fréquence [0, fm] de manière à coder des plans de rétrodiffusion Pi et correspondant à des longueur Li repérées par rapport à une extrémité dudit ensemble fibre optique ;
- des moyens de décalage en fréquence Δf du faisceau laser de référence de manière à inscrire un hologramme dans ledit modulateur spatial de lumière à cristal liquide lorsque la fréquence du faisceau de référence coïncide avec la fréquence du faisceau laser signal ;
- une unité de traitement adaptée pour identifier la position d'un plan de rétrodiffusion Pi repéré par rapport à une extrémité dudit ensemble fibre optique .

L'invention sera mieux comprise et d'autres avantages apparaîtront à la lecture de la description qui va suivre donnée à titre non limitatif et grâce aux figures annexées parmi lesquelles :

- la figure 1 schématise le principe de l'invention dans une variante de capteur à fibre optique fonctionnant en transmission ;
- les figures 2a, 2b et 2c sont relatives à la lecture de l'hologramme inscrit dans le modulateur spatial de lumière à cristal liquide utilisé dans le capteur à fibre optique de l'invention ;
- la figure 3 illustre un exemple de spectre d'intensité détecté avec un capteur à fibre optique de l'invention à proximité d'une excitation acoustique ;
- la figure 4 schématise le principe de l'invention dans une variante de capteur à fibre optique fonctionnant en rétrodiffusion ;
- la figure 5 schématise le principe de l'invention dans une variante de capteur à fibre optique pour localiser une excitation à proximité d'un ensemble fibre optique fonctionnant en rétrodiffusion avec un faisceau signal modulé temporellement ;
- la figure 6 schématise le principe de l'invention dans une variante de capteur à fibre optique pour localiser une excitation à proximité d'un ensemble fibre optique fonctionnant en rétrodiffusion avec un faisceau signal modulé et un faisceau de référence généré en sortie de l'ensemble fibre optique ;
- la figure 7 schématise le principe de l'invention dans une variante de capteur à fibre optique pour localiser une excitation à proximité d'un ensemble fibre optique fonctionnant en réflexion ;
- les figures 8a et 8b schématisent le principe de l'invention dans une variante de capteur à fibre optique pour localiser une excitation à proximité d'un ensemble fibre optique fonctionnant en rétrodiffusion et avec un faisceau laser balayé en fréquence,
- la figure 9 illustre un exemple de réalisation d'un capteur à fibre optique pour localiser une excitation à proximité d'un ensemble fibre optique fonctionnant en rétrodiffusion avec un faisceau signal modulé et un faisceau de référence généré en sortie de l'ensemble fibre ;
- les figures 10a à 10c sont relatives à un exemple de réalisation d'un capteur fibre optique pour localiser une excitation à proximité d'un ensemble fibre optique fonctionnant en rétrodiffusion basé sur un réseau dynamique Brillouin.

Le capteur à fibre optique de la présente invention est apte à localiser une excitation à proximité d'un ensemble fibre optique. L'excitation que le capteur détecte est telle qu'elle induit une modulation de la phase d'amplitude Δφ d'un signal optique se propageant dans l'ensemble fibre optique. L'excitation correspond par exemple à une variation de pression, dans l'air (capteur de type microphone) ou dans l'eau (capteur de type hydrophone) typiquement à une fréquence supérieure à quelques Hz et sera référencée A dans la suite de la présente description.

De manière générale, le capteur à fibre optique de la présente invention utilise l'holographie digitale.

L'holographie digitale est décrite notamment dans l'article de J. W. Goodman and R. W. Laurence, « Digital image formation from electronically detected holograms », Appl Phys Lett 11, 77 (1967) et est une technologie développée actuellement dans l'industrie et l'instrumentation scientifique, qui trouve diverses applications en métrologie, techniques non destructives de test et sondage, microscopie et imagerie 3D comme décrit dans l'article de U. Shnars and W. Juptner, Digital holography (Springer Ed. 2005). Même avec de très petites intensités du signal, une reconstruction d'image limitée par le bruit photonique a été démontrée comme décrit dans l'article de M. Gross and M. Atlan, « Digital holography at shot noise level », Opt Lett. 32, 909 (2007). Ces développements récents sont liés à la disponibilité sur le marché de caméras à haute résolution, tant dans le visible que dans le proche infrarouge, et des matrices de détecteurs CCD et CMOS avec une taille de pixels de l'ordre du micron. Un autre aspect important est la très grande capacité de calcul actuelle, permettant l'élaboration d'images de grande taille et la reconstruction d'interférogrammes assez complexes.

Un nouveau schéma d'holographie digitale a été introduit très récemment pour la conjugaison de phase en temps réel d'un front d'onde segmenté et pour la démonstration de la combinaison cohérente de lasers à fibre comme décrit dans l'article de C. Bellanger, A. Brignon, J. Colineau and J. P. Huignard, "Coherent fiber combining by digital holography", Opt Lett. 33, 2937 (2008). Dans cette approche, le système d'holographie digitale consiste en une matrice de détection CCD qui pilote un modulateur spatial de lumière (SLM) à cristaux liquides (LC).

Outre la combinaison cohérente des lasers à fibre, cette configuration a aussi été utilisée pour la démonstration de la conjugaison de phase dans une fibre multimode, dans des milieux fortement diffusants et pour la focalisation et le balayage à travers une fibre multimode dans le but de corriger les déphasages subis par une fibre optique comme décrit dans les articles de M. Paurisse, M. Hanna, F. Druon, P. Georges, C. Bellanger, A. Brignon and J. P. Huignard, "Phase and amplitude control of a multimode LMA fiber beam by use of digital holography", Opt Express 17, 13000 (2009), ou de M. Cui and C. Yang, « Implementation of a digital optical phase conjugation system and its application to study the robustness of turbidity suppression by phase conjugation », Opt Express, 18, 3444 (2010) ou de I. Papadopoulos, S. Farahi, D. Psaltis, and C. Moser, "Focussing and scanning light through a multimode optical fiber using digital phase conjugation", Opt Express. 20, 10583 (2012) ou de I. Papadopoulos, O. Simandoux, S. Farahi, J. P. Huignard, E. Bossy, D. Psaltis and C. Moser, "Optical resolution photoacoustic microscopy by use of multimode fiber", Appl Phys Lett, 102, 211106 (2013) ou bien encore de I. Papadopoulos, S. Farahi, D. Psaltis and C. Moser, "High resolution lensless endoscope based on digital scanning through a multimode optical fiber", Biomed Opt Express 4, 260 (2013).

Ces articles ne concernent néanmoins donc pas comme dans la présente invention, la détection d'une excitation par un capteur à fibre optique capable de détecter de très faibles perturbations.

Le capteur de l'invention comprend la combinaison d'un ensemble fibre optique pouvant comporter une fibre pouvant avantageusement être multimode comme capteur de contrainte et d'un interféromètre adaptatif basé sur de l'holographie digitale, pour détecter une perturbation.

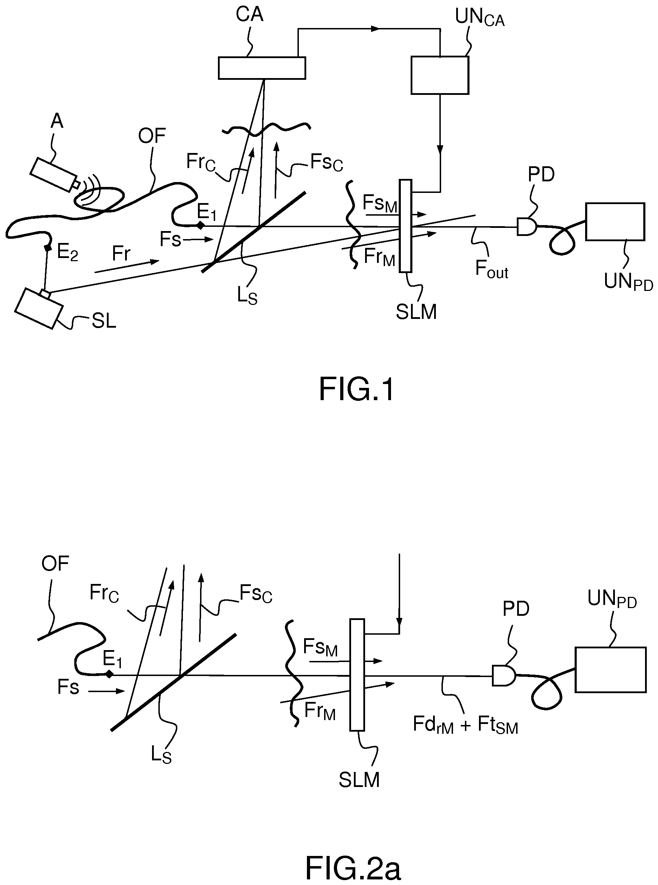

La figure 1 schématise le principe de l'invention dans une première variante fonctionnant en transmission. Un ensemble laser SL délivre un faisceau laser, en partie introduit dans l'ensemble fibre optique OF et pour autre partie constituant un faisceau de référence Fr. Selon cette variante fonctionnant en transmission, le faisceau laser est introduit via l'extrémité référencée $E_2$ et ressort de l'ensemble fibre optique en l'extrémité $E_1$, constituant le faisceau signal Fs porteur de l'information relative à l'excitation à détecter A. Les faisceaux Fr et Fs sont séparés via une lame séparatrice Ls pour être dirigés à la fois en direction d'une caméra CA (faisceaux $Fr_C$ et $Fs_C$) et d'un modulateur spatial de lumière à cristal liquide SLM (faisceaux $Fr_M$ et $Fs_M$).

Les deux principaux composants de base sont ainsi une caméra CA pouvant être de type CCD ou CMOS et un modulateur spatial de lumière à cristal liquide SLM et sont placés de façon symétrique à 45° d'une lame séparatrice 50% Ls, et précisément imagés l'un sur l'autre.

Ainsi, les ondes optiques cohérentes, la référence et le signal portant la figure de speckle à démoduler (modulation de phase optique à la fréquence $\Omega$), sont séparées par la lame séparatrice Ls et superposés pour interférer sur la caméra CA.

La figure d'interférence obtenue sur la caméra est adressée électriquement via une unité de traitement $UN_{CA}$ sur le modulateur spatial de lumière à cristal liquide SLM (dénommé ci-après dans la description LC SLM) afin de créer l'hologramme de phase qui lui correspond.

Cet hologramme permet la diffraction du faisceau laser de référence et celle du faisceau signal, incidents directement sur le LC SLM. Le signal diffracté dans un des ordres de diffraction est collecté sur une photodiode PD. Sa fréquence est celle de la modulation de phase sur l'ensemble fibre optique. Son amplitude de modulation en intensité est proportionnelle à l'amplitude de la modulation de phase de l'onde signal portée par le faisceau signal.

Les faisceaux de référence et signal $Fr_M$ et $Fs_M$ viennent lire l'hologramme ainsi inscrit. On peut notamment analyser l'ordre $I_{-1}$ de diffraction du faisceau de référence diffracté $Fd_{rM}$ par l'hologramme inscrit, superposé au faisceau laser transmis dans l'ordre 0 du signal $Ft_{SM}$.

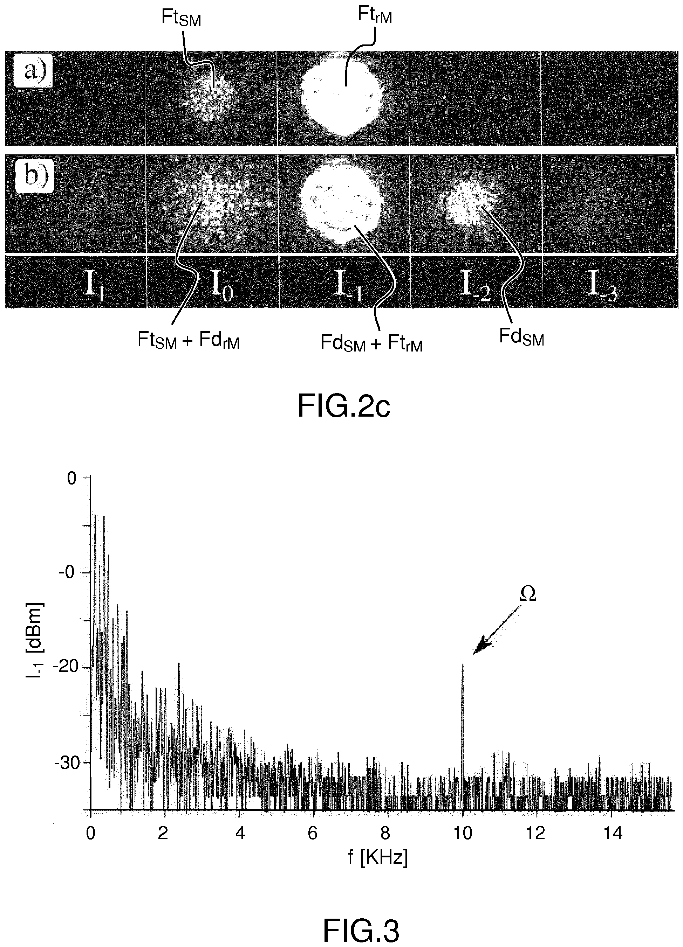

Selon le schéma de principe de la figure 1, repris de manière agrandie en figure 2a au niveau du LC SLM, la photodiode est placée au niveau de l'ordre $I_{-1}$ de diffraction du faisceau laser de référence diffracté.

Le mélange et l'interaction d'ondes optiques dans un système multimodal a été décrit dans l'article de U. Bortolozzo, S. Residori and J. P. Huignard, « Beam-Coupling in Photorefractive Liquid Crystal Light-Valves », J. Phys. D: Appl. Phys. 41, 224007 (2008), dans le cadre de valve optique et permet également dans le cadre de la présente invention de réaliser la mesure efficace de très faibles perturbations de phase.

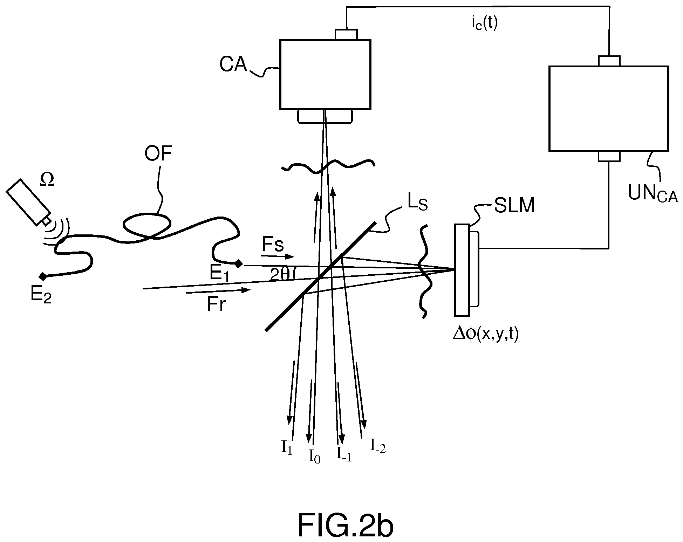

Le modulateur spatial de lumière à cristal liquide peut aussi bien fonctionner en transmission qu'en réflexion, comme représenté en figure 2b, selon cette variante, on réalise ainsi un double passage au travers du cristal liquide, réalisant ainsi un double déphasage, les faisceaux signal et de référence faisant un angle $2\theta$ entre eux au niveau du SLM.

La figure 2c illustre la diffraction du signal et de la référence sur l'hologramme digital, pour des détecteurs capables de détecter différents ordres de diffraction (ordres : $I_1$, $I_0$, $I_{-1}$, $I_{-2}$, $I_{-3}$) dans deux configurations différentes :

- cas (a) : la caméra est éteinte, le faisceau signal et celui de référence sont transmis :

    ◦ on détecte sur l'ordre $I_0$ : l'intensité du faisceau laser signal $Ft_{sM}$ ;
    ◦ on détecte sur l'ordre $I_{-1}$ : l'intensité du faisceau Ft$_{rM}$ ;

- cas (b) : les faisceaux laser signal et référence sont diffractés, la caméra est en fonctionnement permettant l'inscription d'un hologramme de diffraction :

  ○ on détecte sur l'ordre I$_0$ : l'intensité du faisceau signal transmis Ft$_{sM}$ et l'intensité du faisceau de référence diffracté dans cet ordre : Fd$_{rM}$ ;
  ○ on détecte sur l'ordre I$_{-1}$ : l'intensité du faisceau laser signal diffracté Fd$_{sM}$, et l'intensité du faisceau laser de référence transmis Ft$_{rM}$ ;
  ○ on détecte sur ordre I$_{-2}$: l'intensité du faisceau signal diffracté Fd$_{SM}$ dans cet ordre supérieur.

L'intensité totale incidente est de 0.4 mW/cm$^2$.
La figure 3 illustre le spectre d'intensité détecté sur l'ordre de diffraction -1, montrant une modulation de phase $\Omega$ à 10 KHz obtenue avec les paramètres suivants :

- une source laser utilisée à état solide à 532 nm de longueur d'onde ;
- une fibre multimode de 5 m (une ouverture numérique ON=0.2 et un diamètre de coeur d=200 microns) ;
- une perturbation de phase à la fréquence 10KHz avec une amplitude de l'ordre de 0.3mrad induite dans ladite fibre optique par un cristal piézo-électrique ;
- l'holographie digitale réalisée par une caméra CMOS (Photonfocus A1312, 1312x1080 pixels, 8 microns de taille de pixel, 8 bit) et un modulateur spatial à cristal liquide (HOLOEYE, PLUTO fonctionnant en réflexion comme représenté en figure 2b, un miroir étant intégré derrière le cristal liquide) ;
- l'image détectée par la caméra est enregistrée par un ordinateur et envoyée sur le modulateur spatial à cristal liquide ;
- la modulation est détectée sur l'ordre -1 par une photodiode silicium.

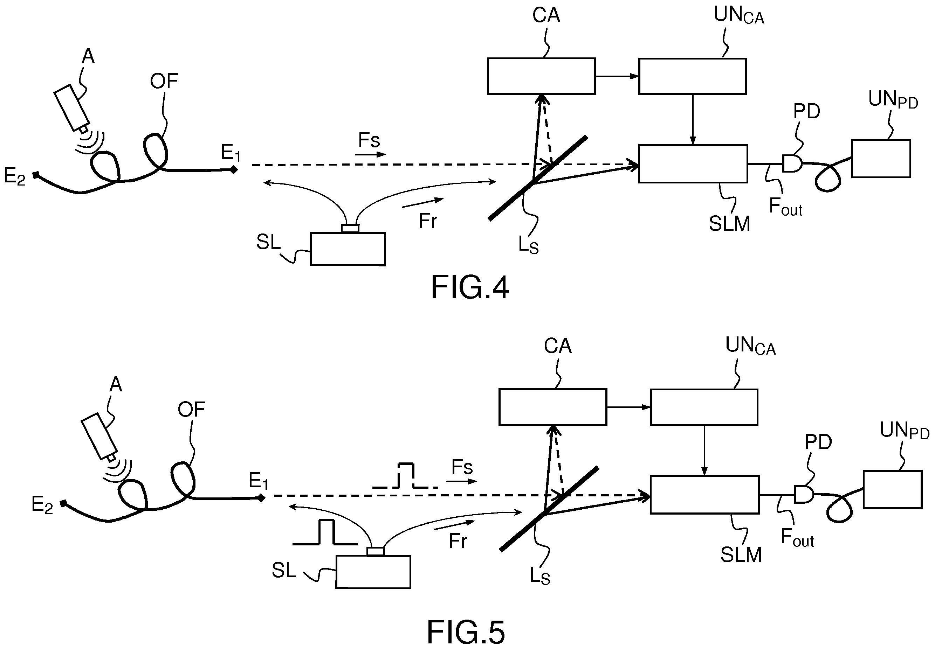

Le capteur à fibre optique de l'invention peut également fonctionner selon le principe décrit précédemment et en mode de rétrodiffusion Rayleigh comme schématisé en figure 4. La rétro-diffusion Rayleigh se produit à la même longueur d'onde que celle des photons incidents. Les photons diffusés et guidés en sens inverse par rapport aux photons injectés dans la fibre portent la modulation de phase subie sur l'aller-retour de l'impulsion, jusqu'à l'extrémité de la fibre.
L'ensemble laser SL délivre une source qui est séparée via un coupleur en deux voies , une voie dédiée à l'onde de référence portée par le faisceau de référence et une voie dédiée à l'onde signal et portée par le faisceau Fs en sortie de l'ensemble fibre optique, après introduction au niveau de l'extrémité E$_1$ et propagation dans l'ensemble fibre optique OF.

Le capteur de la présente invention peut avantageusement comprendre des moyens permettant de localiser l'excitation par rapport à l'étendue de l'ensemble fibre optique défini entre les deux extrémités E$_1$ et E$_2$ lorsqu'il fonctionne en rétrodiffusion.

Premier exemple :

Selon un premier schéma de principe, représenté en figure 5, le capteur à fibre optique fonctionne en mode de rétrodiffusion. L'ensemble laser délivre une source qui est séparée en deux voies relatives à deux ondes : une onde de référence portée par le faisceau Fr qui est dirigée directement vers l'interféromètre, et une onde signal qui est modulée temporellement et injectée dans la fibre puis rétrodiffusée portée par le faisceau signal Fs. L'onde rétrodiffusée porte la modulation de phase à détecter et interfère avec la référence dans l'interféromètre. L'arrivée séquentielle des impulsions permet la localisation de la perturbation. Connaissant la vitesse v de propagation de l'onde lumineuse dans la fibre optique, la mesure de la durée dt d'un aller-retour d'une impulsion permet de déterminer à quelle distance Li dans la fibre celle-ci a été rétrodiffusée :

$$2x \ Li = vxdt .$$

Deuxième exemple :

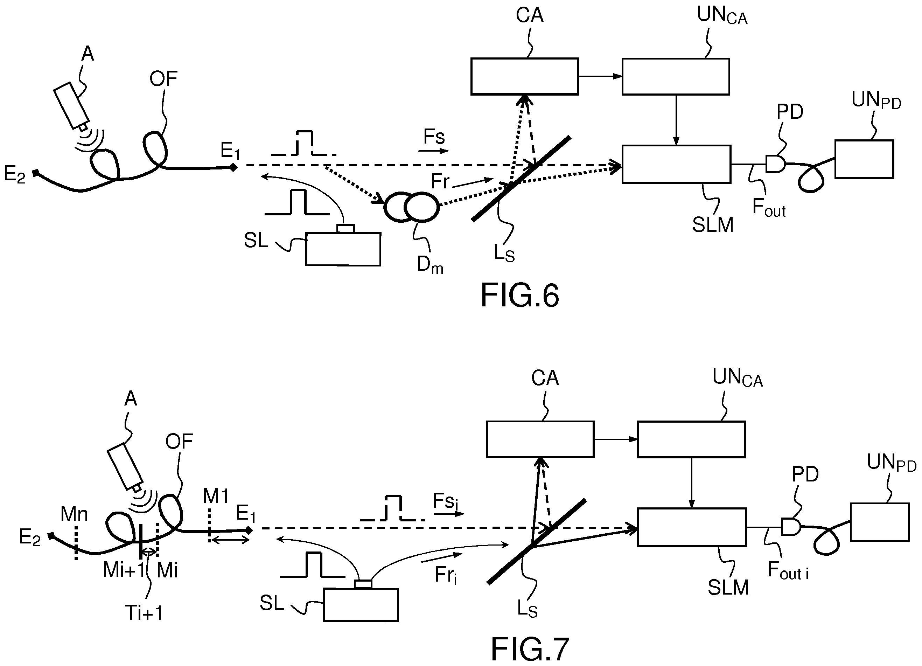

Selon un autre schéma de principe, représenté en figure 6, le capteur à fibre optique peut être exploité en mode de rétrodiffusion avec un ensemble laser qui délivre une source modulée temporellement et envoyée dans l'ensemble fibre optique OF. L'onde rétrodiffusée porte la modulation de phase à détecter. Elle est séparée en deux voies, relatives à deux ondes optiques via un coupleur, avec une onde de référence portée par un faisceau de référence sur laquelle est ajoutée une différence de marche de longueur L et une onde signal portée par le faisceau laser signal Fs.
La différence de marche de longueur L générée par des moyens D$_m$ est ainsi ajoutée entre les deux voies (signal et référence). Ces moyens peuvent typiquement être constitués par un tronçon de fibre optique.
Les deux voies sont envoyées vers l'interféromètre. L'interférence entre l'impulsion et sa réplique retardée permet de mesurer le déphasage subi par la fibre sur une distance correspondant à L/2. L'arrivée séquentielle des impulsions permet la localisation de la perturbation.

Troisième exemple :

Selon un autre schéma de principe, le capteur à fibre optique peut être exploité en mode réflexion, l'ensemble fibre optique OF étant configuré pour intégrer différents miroirs sélectifs en longueurs d'onde et distribués le long de l'ensemble fibre optique

L'ensemble source laser SL délivre quant à lui, une source continue et multi-longueurs d'onde (pouvant être composée de plusieurs sources monomodes) émettant à des longueurs d'onde $\lambda_1$, ..., $\lambda_i$, ...,$\lambda_N$. La source multi-longueurs d'onde $\lambda_i$ est séparée en deux voies : une voie de référence comportant des ondes portées par les faisceaux Fri dirigées directement vers l'interféromètre, et une voie destinée aux ondes portées par les faisceaux signal Fsi en sortie de l'ensemble fibre optique (monomode ou multimode).

Cet ensemble fibre optique est composé de N tronçons successifs Ti indicés i, chaque tronçon comprenant un dispositif de réflexion sélectif Mi apte à réfléchir une longueur d'onde d'émission associée $\lambda i$, c'est-à-dire dont la réflexion est centrée sur la longueur d'onde $\lambda i$. Les dispositifs de réflexion sont typiquement espacés d'une distance d. Chaque tronçon de longueur d correspond à une partie sensible du capteur.

Les indices i sont repérés par rapport à une extrémité $E_1$ de l'ensemble fibre OF située du côté de l'ensemble laser: le tronçon $T_1$ réfléchissant la longueur d'onde $\lambda_1$ correspond au premier tronçon, soit le tronçon le plus proche de l'extrémité $E_1$, le tronçon $T_N$ réfléchissant la longueur d'onde $\lambda_N$ correspond au dernier tronçon, soit le tronçon le plus éloigné de l'extrémité $E_1$.

Selon un mode de réalisation, chaque dispositif de réflexion Mi comprend un miroir dichroïque. Préférentiellement dans ce cas, l'ensemble fibre optique comprend N fibres optiques $OF_1$, ...,OFi,..., $OF_N$, chaque fibre OFi et le miroir dichroïque associé MDi correspondant à un tronçon Ti.

Selon un autre mode de réalisation, chaque dispositif de réflexion Mi comprend un réflecteur de Bragg. Préférentiellement dans ce cas, l'ensemble fibre optique OF est formé d'une fibre unique $OF_0$, les réflecteurs de Bragg étant intégrés dans la fibre $OF_0$ à l'aide de moyens d'enregistrement connus de l'état de la technique.

Le capteur selon l'invention comprend en outre un système optique configuré pour réaliser un ensemble de fonctions optiques.

Tout d'abord le système optique est configuré pour injecter par l'extrémité $E_1$ de l'ensemble fibre optique OF, les faisceaux laser Fi émis par l'ensemble laser SL, qui vont ensuite se propager dans la fibre. Le faisceau $F_1$ de longueur d'onde $\lambda_1$ traverse le premier tronçon $T_1$ et se réfléchit sur le dispositif de réflexion $M_1$. Les autres faisceaux $F_2$, ..., $F_i$, $F_{i+1}$, ..., $F_N$ de longueur d'onde $\lambda_2$,..., $\lambda_i$, $\lambda_i$+1, ..., $\lambda_N$ traversent le deuxième tronçon $T_2$. Le tronçon $T_{i+1}$ étant situé entre le miroir $M_i$ et le miroir $M_{+1}$. Le faisceau de longueur d'onde $\lambda_2$ se réfléchit sur le dispositif de réflexion $M_2$ et ainsi de suite jusqu'au dernier faisceau de longueur d'onde $\lambda_N$ qui seul traverse le dernier tronçon $T_N$ et se réfléchit sur le dispositif de réflexion $M_N$.

La figure 7 schématise, cette variante sur laquelle sont représentés les faisceaux Fsi et Fri , chaque faisceau Fsi étant réfléchi par un miroir $M_i$.

Ainsi l'ensemble fibre optique reçoit en sortie de l'extrémité $E_1$, les N faisceaux signal Fsi indicés i de longueurs d'onde $\lambda i$ en sortie de l'ensemble fibre optique OF. Chaque faisceau signal Fsi est issu de la réflexion sur le moyen de réflexion Mi associé à la longueur d'onde $\lambda i$, du faisceau laser Fi de longueur d'onde $\lambda i$ injecté puis propagé dans les différents tronçons de l'ensemble fibre optique OF, comme décrit ci-dessus.

Le système optique est également configuré pour générer N faisceaux de référence Fri indicés i de longueurs d'onde $\lambda i$, à partir du faisceau laser Fi de longueur d'onde d'émission $\lambda i$.

Avec les faisceaux de références Fri et les faisceaux signal Fsi, le système optique est configuré pour réaliser N zones d'interférences Zi indicés i, chaque zone correspondant à l'interférence entre un faisceau de référence Fri et un faisceau signal Fsi de même longueur d'onde d'émission $\lambda i$. Ainsi une zone d'interférence Zi correspond à l'interférence entre le faisceau référence Fri issu directement du laser d'une part, et le faisceau signal Fsi injecté, propagé dans l'ensemble fibre optique d'autre part, tous deux de longueur d'onde $\lambda i$. L'interférence de Fri et Fsi donne naissance à un réseau de franges d'intensité .

Les N zones d'interférences sont disjointes, ou adjacentes, ou partiellement en recouvrement, ou localisées dans un même endroit de l'espace.

Le détecteur optique PD, typiquement une photodiode, est configuré pour détecter les N signaux optiques de sortie $F_{out}i$ indicés i diffractés respectivement par les N hologrammes Hi. Les hologrammes Hi fonctionnant typiquement dans un régime de diffraction Raman-Nath, la détection peut s'opérer sur différents faisceaux diffractés.

Selon un mode de réalisation, le détecteur optique est disposé de manière à détecter, pour chaque longueur d'onde, le faisceau diffracté issu du faisceau signal Fsi (selon la même direction).

Selon un autre mode de réalisation, le détecteur optique est disposé de manière à détecter, pour chaque longueur d'onde, le faisceau diffracté issu du faisceau de référence Fri (selon la même direction).

Selon un autre mode de réalisation, le détecteur optique est disposé de manière à détecter, pour chaque longueur d'onde, un faisceau diffracté d'ordre supérieur.

Le capteur comporte une unité de traitement $UN_{PD}$ adaptée pour identifier le tronçon de l'ensemble fibre OF situé à proximité de l'excitation à localiser. Cette identification s'effectue à partir des N signaux optiques de sortie détectés. En effet chaque signal optique $F_{out}i$ détecté porte une information sur la modulation de phase $\Delta\phi$, qui se traduit par une éventuelle modulation temporelle de son intensité autour d'une fréquence égale à la fréquence centrale de la modulation de phase $\Delta\phi$.

Cette information est détectée par le détecteur PD, puis traitée par l'unité de traitement $UN_{PD}$ pour identifier le tronçon le plus proche de l'excitation externe qui a induit la modulation de phase dans la fibre.

Selon un mode de réalisation, le traitement consiste à déterminer, parmi les N signaux optiques de sortie détectés ($F_{out}i$), le signal optique de sortie d'indice le plus faible $k_1$ présentant la modulation de phase (c'est-à-dire une modulation d'intensité associée), le tronçon à identifier $T_{k1}$ correspondant au tronçon présentant l'indice $k_1$.

En effet, si l'excitation se produit à proximité du tronçon $T_1$ le plus proche de l'extrémité $E_1$, tous les signaux optiques $F_{out}i$ pour toutes les longueurs d'onde $\lambda i$, se sont propagés dans ce tronçon, et sont donc modulés. Le tronçon de plus faible indice est le tronçon $T_1$.

De manière plus générale, si l'excitation se produit à proximité du tronçon d'indice $k_1$ $T_{k1}$, ce sont les faisceaux optiques d'indices supérieur ou égal à $k_1$ qui se sont propagés dans le tronçon $T_{k1}$, les faisceaux optiques d'indice inférieur $1,...,k_1-1$, s'étant déjà réfléchis sur les dispositifs de réflexion correspondant $M1,..., Mk_1$. Ainsi, le tronçon $T_{k1}$ est identifié. Ainsi, l'ensemble fibre optique OF structuré en tronçons réalise un capteur distribué, le multiplexage en longueur d'onde permettant l'identification du tronçon localisé à proximité de l'excitation externe.

Quatrième exemple :

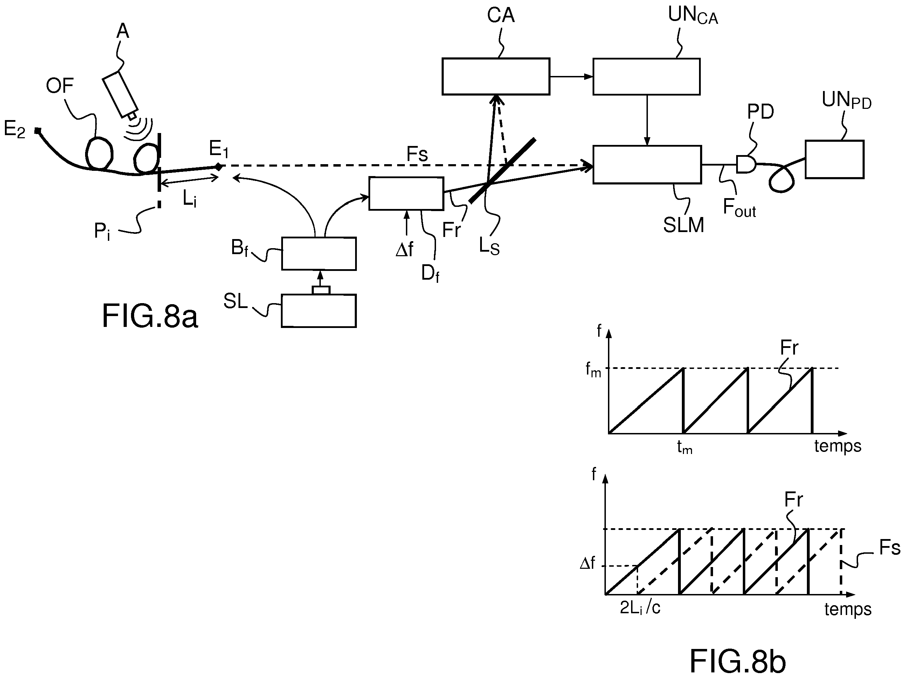

Selon une autre variante de l'invention, la localisation de l'excitation est réalisée grâce à l'utilisation d'un ensemble laser SL délivrant une source continue et balayée en fréquence périodiquement par des moyens Bf pouvant par exemple moduler directement le courant d'une diode laser ou par un translateur de fréquence acousto-optique, comme schématisé en figure 8a. Le cycle de fréquence génère de manière périodique, une fréquence croissante de 0 à $f_m$, durant une période $t_m$.

La source est séparée en deux voies : une voie de référence correspondant à une onde portée par le faisceau de référence Fr qui est en plus décalée en fréquence de $\Delta f$ par des moyens Df, par exemple par un translateur de fréquence acousto-optique ou un modulateur électro-optique et dirigée vers l'interféromètre, et une voie issue du faisceau laser, introduit dans l'ensemble fibre optique et correspondant à une onde signal en sortie de l'ensemble fibre optique (monomode ou multimode). La figure 8b illustre le cycle de fréquence f imposé sur le faisceau de référence et le faisceau signal, ledit faisceau référence Fr étant retardé de 2Li/c par rapport au faisceau signal Fs, avec Li la position d'un plan $P_i$ de rétrodiffusion pour l'onde signal, repéré par rapport à l'extrémité $E_1$ de l'ensemble fibre optique. La figure 8b met en évidence que :

$$\Delta f = 2\ Lif_m/\ (ct_m)$$

L'onde rétrodiffusée portée par le faisceau signal Fs comporte la modulation de phase à détecter et interfère avec la référence dans l'interféromètre.

Le décalage en fréquence $\Delta f$ permet d'inscrire un hologramme lorsque la fréquence du bras de référence coïncide avec la fréquence rétrodiffusée, donc uniquement pour un plan de rétrodiffusion donné. La localisation est donc possible en faisant varier la valeur $\Delta f$. On fait varier $\Delta f$ temporellement sous la forme $\Delta f = axt$ (a étant la vitesse de la variation de fréquence). La valeur de $\Delta f$ qui permet de compenser le « retard » subi par l'onde injectée dans la fibre puis rétro-diffusée permet donc d'obtenir l'inscription d'un réseau fixe entre les deux ondes et leur diffraction dans le modulateur spatial à cristal liquide SLM. Cette valeur de $\Delta f$ connue permet de remonter à la distance Li à laquelle l'onde à été rétrodiffusée : $\Delta f = ax2xLi/v$.

De manière générale, le capteur selon l'invention présente de nombreux avantages. Il est bas coût, discret et facilement déployable.

Un autre avantage de la présente invention est que le capteur présente une très grande sensibilité. En effet une caractéristique importante de l'holographie adaptative est que pour les petites modulations de phase d'amplitude $\Delta\phi$, la détection est toujours linéaire en $\Delta\phi$ donc la puissance mesurée sur chaque ordre de sortie est directement proportionnelle à l'amplitude de la modulation de phase, et une mesure directe de $\Delta\phi$ peut être réalisée en plaçant une photodiode sur l'un des ordres diffractés à la sortie du modulateur spatial de lumière à cristal liquide.

Du fait du caractère linéaire de la détection, on peut mesurer des petits signaux, qui autrement seraient cachés par le bruit (par exemple si la détection est quadratique la pente de la courbe de mesure, qui donne la sensibilité, est sensiblement inférieure). De plus, la sensibilité est également augmentée du fait du grand déphasage produit par le modulateur spatial de lumière à cristal liquide en fonction des variations d'intensité.

Cinquième exemple :

Cet exemple concerne la réalisation d'un capteur à fibre optique distribué permettant de localiser une perturbation :

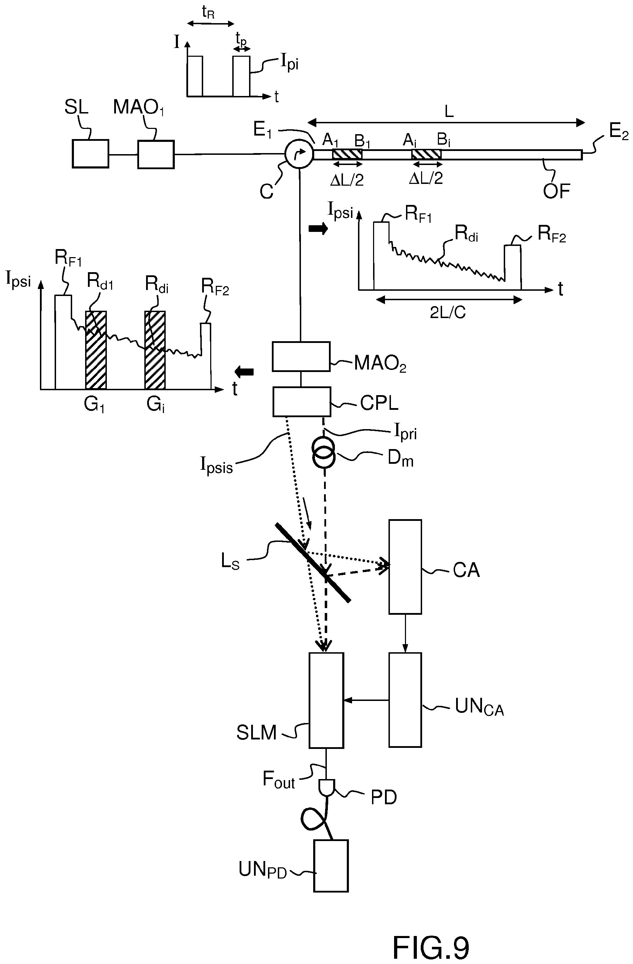

Selon cet exemple de configuration illustré en figure 9, le capteur à fibre optique distribué comprend une source laser SL, un modulateur acousto-optique $MAO_1$ générateur d'impulsions optiques $I_{pi}$ émises tous les $t_R$ et de durée d'impulsions $t_p$, et une fibre optique OF de longueur L. Une série d'impulsions lumineuses $I_{pi}$ de durée $t_p$ sont ainsi injectées dans ladite fibre optique via une première extrémité $E_1$, se propagent le long de ladite fibre optique, sont réfléchies au niveau de la seconde extrémité $E_2$, puis rétrodiffusées le long de ladite fibre, elles correspondent aux impulsions optiques de sortie $I_{psi}$ qui sont exploitées et porteuses d'information, comme illustré en figure 9. Différentes zones dites sensibles sont sondées, et représentées entre les positions $A_1$ et $B_1$, puis entre les positions $A_i$ et $B_i$ au niveau de la fibre optique.

Ainsi, une impulsion introduite dans la fibre optique OF de longueur L, via un circulateur C donne lieu à une onde rétro-diffusée pendant toute la durée de l'aller-retour de l'impulsion dans la fibre, soit pendant une durée de 2xL/c. La figure 9 met en évidence, l'intensité lumineuse d'une impulsion de sortie $I_{psi}$ générée par la rétro-diffusion $R_d$, la réflexion $R_{F1}$ par la première extrémité et par la réflexion $R_{F2}$ par la seconde extrémité.

Un second modulateur acousto-optique $MAO_2$ est prévu en sortie de circulateur C, ainsi qu'un coupleur CPL afin de diviser les impulsions de sortie sur deux voies. Des moyens Dm permettant d'introduire un retard de longueur $\Delta L$ correspondant au temps d'aller retour de la lumière dans la zone sensible de longueur $\Delta L/2$ sont insérés sur l'une des deux voies. Ce retard permet de produire sur la caméra CA et le modulateur spatial de lumière à cristal liquide SLM une interférence entre une onde et elle-même décalée dans le temps.

Ce décalage temporel correspond à un décalage en distance de longueur $\Delta L/2$ dans le capteur. L'onde qui passe dans la voie retardée provient de la position $A_i$ dans la fibre, l'onde qui passe dans la voie non retardée provient de la position $B_i$ dans la fibre, qui se trouve $\Delta L/2$ plus loin dans le capteur.

L'interférence des rétro-diffusions provenant des positions $A_i$ et de $B_i$ donne la différence de phase entre la rétro-diffusion venant de $A_i$ et la rétro-diffusion venant de $B_i$. Il s'agit bien de la phase subie par l'onde issue de la position $B_i$ sur la longueur $\Delta L/2$. Les figures d'interférences correspondant aux N zones sensibles dans le capteur sont d'autant plus décorrélées que la longueur de zone sensible est importante.

La phase relative de N figures d'interférence étant aléatoire, leur superposition peut diminuer le contraste et peut brouiller les franges. C'est pourquoi, un modulateur acousto-optique $MAO_2$ peut être inséré avant la séparation de la rétro-diffusion en deux voies assurée par un coupleur CPL. Il permet d'ouvrir une porte de durée $2x\Delta L$ pour ne laisser interférer que les ondes provenant d'une zone sensible à la fois,

La figure 9 met ainsi également en évidence, l'interrogation via l'ouverture de deux portes $G_1$ et $G_i$ décalées dans le temps, et relatives à différentes impulsions optiques d'émission $I_{pi}$.

Dans ce cas, une des deux voies sert de référence avec des impulsions optiques de sortie de référence $I_{pri}$ et l'autre voie sert de voie signal porteuses d'impulsions optiques signal $I_{psiS}$, toutes issues des impulsions optiques de sortie $I_{psi}$, les ondes optiques des deux voies interférant au niveau de la caméra et du modulateur spatial de lumière à cristal liquide SLM .

Cette architecture permet de localiser le long de la fibre la perturbation de phase induite par la grandeur physique à mesurer avec une résolution spatiale $\Delta L/2$. Elle est mesurée par analyse fréquentielle du signal électrique délivré par la photodiode PD.

La cadence maximale d'interrogation de deux zones sensibles différentes du capteur est limitée par le temps de réponse « off » des cristaux liquides : soit $t_{off}$, le temps de retour des cristaux liquides dans le modulateur spatial de lumière à cristal liquide SLM , ce qui implique que la cadence de deux impulsions successives définie par le paramètre $t_R$ doit être supérieur au paramètre $t_{off}$.

Il convient d'attendre que les cristaux liquides impliqués dans l'inscription de la figure d'interférence de la première zone sensible soient de nouveau disponibles.

Sixième exemple :

Cet exemple de réalisation comprend une architecture distribuée à base d'un réseau Brillouin dynamique comme réflecteur mobile et d'une onde optique d'interrogation comprenant une série d'impulsions optiques.

Le réseau Brillouin, généré par l'interaction entre deux impulsions optiques, permet de définir une portion de fibre optique sensible. Dans ce cas, on ne s'intéresse pas à l'aspect fréquentiel de l'interaction Brillouin stimulée mais uniquement au coefficient de réflexion du réseau dynamique. Une onde sonde permet alors de sonder la fibre optique.

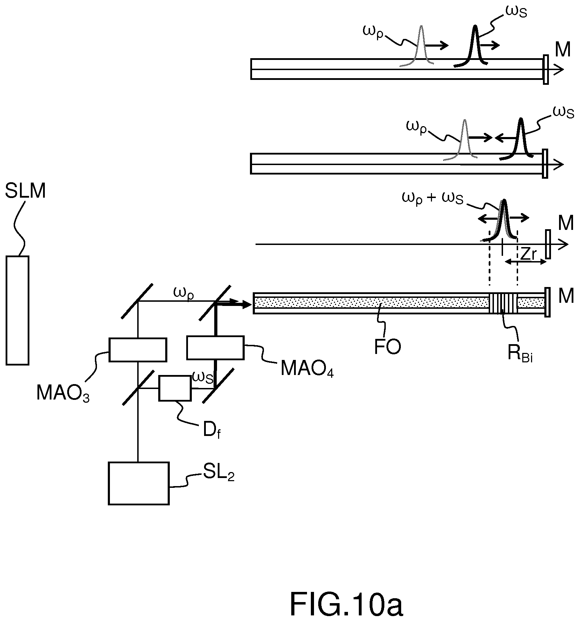

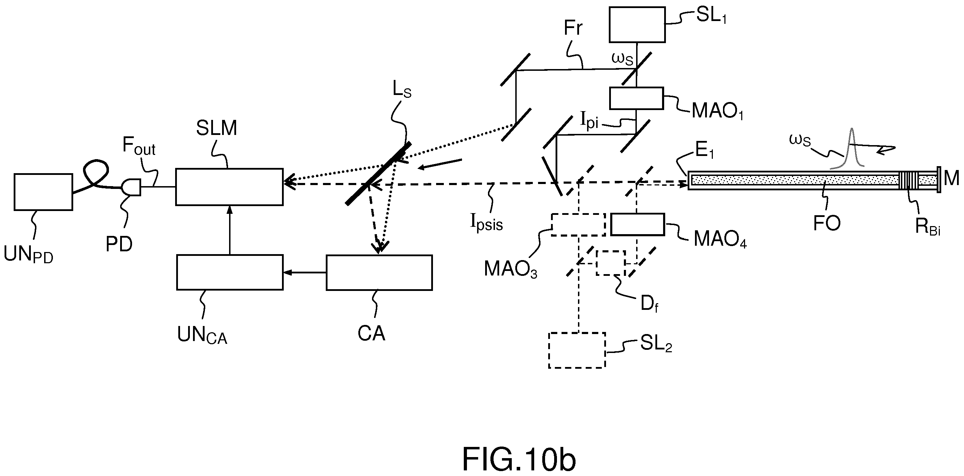

L'architecture proposée est schématisée sur les figures 10a et 10b.

La figure 10a illustre la partie des moyens nécessaires à l'étape d'écriture du réseau Brillouin $R_{Bi}$. Deux impulsions issues d'un même laser $SL_2$ de fréquence optique $\omega_p$ mais décalées temporellement et spectralement inscrivent un réseau de Bragg par Diffusion Brillouin Stimulée $R_{Bi}$. Ainsi à partir d'une unique source laser $SL_2$, il est prévu après division du faisceau laser, deux modulateurs acousto-optiques $MAO_3$ et $MAO_4$ et des moyens de décalage en fréquence Df pouvant être électro-optiques, afin de générer deux séries d'impulsions optiques aux fréquences optiques $\omega_p$ et $\omega_s$ (l'onde à la fréquence $\omega_p$ est représentée en trait fin, l'onde à la fréquence $\omega_s$ étant représentée en trait épais). Typiquement, la longueur maximale de la fibre optique L est limitée à la moitié de la longueur de cohérence $L_{coh}$ du laser utilisé.

L'onde Stokes est décalée vers les basses fréquences de $\omega_B$, la fréquence Brillouin, correspondant à l'effet Doppler : réflexion de la pompe sur un réseau mobile. Ce réseau, équivalent à un réseau de Bragg (dû à l'effet d'électrostriction entre l'onde pompe et l'onde Stokes dans la silice), se propage dans le même sens que la pompe à la vitesse du son $c_{ac}$ dans la fibre $\omega_B = 2nc_{ac}/\lambda$.

La durée des impulsions détermine la longueur du réseau. Le réseau est inscrit successivement à différentes positions $Z_r$ dans la fibre.

Sa position est contrôlée (c'est-à-dire la zone dans la fibre où la réflexion de l'impulsion à $\omega s$ croise l'impulsion à $\omega p$) par l'intervalle de temps $\Delta t$ entre les deux impulsions. En pratique, on propose d'utiliser un traitement réfléchissant M à l'extrémité de la fibre afin d'obtenir la réflexion de l'onde à $\omega s$ permettant de stimuler la diffusion Brillouin.

Ainsi, sur la première voie, le premier modulateur acousto-optique $MOA_3$ est utilisé pour obtenir les impulsions pompe. Sur la deuxième voie, la fréquence du laser est décalée d'une valeur correspondant à $\omega_B$ ($\omega_s = \omega_p - \omega_s$) soit environ 10GHz dans les fibres optiques, puis un autre modulateur acousto-optique MAO$_4$ est utilisé pour obtenir les impulsions Stokes.

La figure 10b illustre la partie des moyens nécessaires à l'étape de lecture de la phase qui consiste à utiliser ce réseau Brillouin R$_{Bi}$ comme miroir de Bragg.

Une troisième onde « sonde » issue de l'ensemble optique comprenant un laser SL$_1$ est injectée dans la fibre à une fréquence $\omega_s$ et fait un aller-retour entre l'entrée de la fibre et le réseau Brillouin R$_{Bi}$. Elle accumule un déphasage sur cet aller-retour.

Ce déphasage est le signal d'intérêt. On provoque un hologramme sur le modulateur spatial de lumière à cristal liquide SLM et la caméra entre le retour de la sonde et une référence provenant du même laser. On utilise un ensemble optique comprenant un laser SL$_1$ qui émet un faisceau laser, divisé pour générer un faisceau laser F$_r$, l'autre partie dudit faisceau étant introduite dans un modulateur acousto-optique pour générer une série d'impulsions I$_{pi}$ à la fréquence optique $\omega_s$ pour réaliser l'étape de lecture. Typiquement, la durée de vie du réseau ainsi inscrit est définie par la durée de vie des phonons acoustiques dans le matériau de la fibre optique pouvant être de manière classique, la silice, soit environ 10ns. Il est donc nécessaire de venir lire la phase dans les 10 ns suivant l'écriture. Les impulsions I$_{pi}$ introduites dans la fibre optique, génèrent en sortie de fibre des impulsions I$_{psiS}$ après réflexion au niveau du réseau Brillouin R$_{Bi}$, venant interférer avec le faisceau de référence sur la caméra et le SLM.

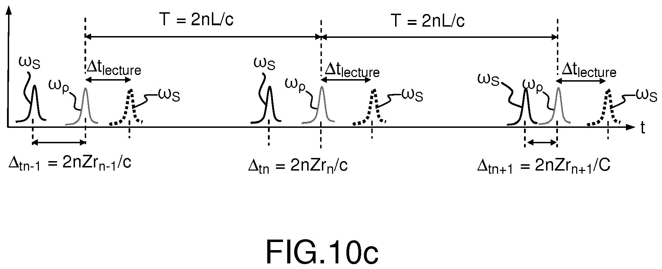

La figure 10c illustre l'alternance d'étapes d'écriture et d'étapes de lecture, correspondant à des variations d'inscription de réseaux Brillouin R$_{Bi}$ à différents endroits dans la fibre optique. La position du réseau Brillouin R$_{Bi}$ dans la fibre est réglée par le décalage temporel entre deux impulsions d'écriture aux fréquences $\omega_p$ et $\omega_s$.

A chaque cycle d'écriture-lecture, le spectre obtenu au cycle N est soustrait au spectre obtenu au cycle N+1 afin d'avoir accès à l'information qui a lieu dans la portion de fibre correspondant à l'interrogation (écriture/lecture) par les impulsions du cycle N.

La période du processus écriture-lecture est : T = 2L/c = 1/f$_{rep}$

On obtient le spectre Si (t, L-Z$_r$) du signal de perturbation de la phase à ti = i*T, pour le réflecteur Brillouin R$_{Bi}$ à la position L-Z$_{ri}$. Plus précisément, Si(t, L-Z$_r$) est le spectre du signal acoustique qui module la phase sur un aller-retour entre l'entrée de la fibre et le réflecteur Brillouin R$_{Bi}$ inscrit, donc sur la longueur 2x L-Z$_{ri}$.

**Revendications**

**1.** Capteur à fibre optique pour détecter une excitation à proximité d'un ensemble fibre optique, ladite excitation induisant une modulation de la phase d'un signal optique se propageant dans ledit ensemble fibre optique, ledit capteur comprenant :

- un ensemble laser (SL) d'au moins un laser, ledit ensemble laser étant configuré pour émettre au moins un faisceau laser ;
- un ensemble fibre optique (OF) présentant une première extrémité (E$_1$) et une seconde extrémité (E$_2$) ;
- un système optique configuré pour :

  ◦ injecter par ladite première ou ladite seconde extrémité, au moins une partie dudit faisceau laser ;
  ◦ recevoir par ladite première extrémité, au moins un faisceau signal (Fs) issu de la partie du faisceau laser injecté et propagé dans ledit ensemble fibre ;
  ◦ générer au moins un faisceau de référence (Fr) à partir dudit faisceau laser ou dudit faisceau signal ;
  ◦ réaliser au moins une zone d'interférence correspondant à l'interférence entre une partie du faisceau de référence et une partie du faisceau signal ;

- un ensemble d'holographie digitale comprenant :

  ◦ un modulateur spatial de lumière à cristal liquide configuré pour recevoir une partie du faisceau signal (Fs) et une partie du faisceau de référence (Fr) ;
  ◦ une caméra configurée pour recevoir ladite zone d'interférence générant une figure d'interférence, ladite figure d'interférence étant adressée électriquement sur ledit modulateur spatial de lumière à cristal liquide pour y créer un hologramme de phase lui correspondant ;

- au moins un détecteur optique configuré pour détecter un faisceau signal optique de sortie résultant :

  ◦ de la diffraction de ladite partie du faisceau signal et/ou de ladite partie du faisceau de référence reçue(s) par l'hologramme inscrit dans ledit modulateur spatial de lumière à cristal liquide et
  ◦ de la transmission de ladite partie du faisceau référence et /ou de ladite partie du faisceau signal transmise(s) par ledit modulateur spatial de lumière à cristal liquide ;

- une unité de traitement (UN$_{PD}$), en sortie dudit détecteur optique pour traiter ledit faisceau si-

gnal optique de sortie ($F_{out}$) permettant d'extraire une information relative à ladite excitation.

2. Capteur à fibre optique selon la revendication 1 dans lequel l'ensemble fibre optique est multimode.

3. Capteur à fibre optique selon l'une des revendications 1 ou 2, **caractérisé en ce qu'**il comprend des premiers moyens pouvant être un premier modulateur acousto-optique ($MAO_1$) pour générer des impulsions optiques depuis ledit laser.

4. Capteur à fibre optique selon l'une des revendications 1 à 3 dans lequel une lame séparatrice sépare le faisceau signal et le faisceau de référence en deux parties, une première partie desdits faisceaux étant dirigée sur ladite caméra, la seconde partie desdits faisceaux étant dirigée sur le modulateur spatial de lumière à cristal liquide.

5. Capteur à fibre optique selon l'une des revendications 1 à 4, comprenant une première unité de traitement ($UN_{CA}$), pour traiter en sortie de ladite caméra ladite figure d'interférence et l'adresser audit modulateur spatial de lumière à cristal liquide.

6. Capteur à fibre optique selon l'une des revendications 1 à 5 dans lequel le faisceau signal reçu par ladite première extrémité ($E_1$) est issu d'un faisceau introduit au niveau de ladite seconde extrémité ($E_2$) et propagé en transmission dans ledit ensemble fibre optique.

7. Capteur à fibre optique selon l'une des revendications 1 à 5 dans lequel le faisceau signal reçu par ladite première extrémité ($E_1$) est issu d'un faisceau introduit au niveau de ladite première extrémité et rétrodiffusé dans ledit ensemble fibre optique.

8. Capteur à fibre optique pour localiser une excitation à proximité d'un ensemble fibre optique selon l'une des revendications 1 à 6 dans lequel une première partie du faisceau laser est modulée temporellement avant d'être introduit dans l'ensemble fibre optique, une seconde partie du faisceau laser constituant le faisceau laser de référence sans être modulée temporellement, l'arrivée séquentielle des impulsions permettant la localisation de ladite excitation au niveau de l'ensemble fibre optique.

9. Capteur à fibre optique pour localiser une excitation à proximité d'un ensemble fibre optique selon l'une des revendications 1 à 5 dans lequel le faisceau de référence (Fr) est généré à partir dudit faisceau signal en sortie de ladite première extrémité ($E_1$) et comprend des moyens pour créer une différence de marche (Dm) sur ledit faisceau de référence.

10. Capteur à fibre optique selon la revendication 7, **caractérisé en ce qu'**il comporte au moins :

   - un circulateur (C) positionné :

      ∘ en sortie dudit ensemble optique comprenant au moins un laser ;
      ∘ en entrée de l'ensemble fibre optique (OF) ;
      ∘ en entrée dudit modulateur spatial de lumière à cristal liquide (SLM) ;

   - un coupleur (CPL) situé en sortie dudit ensemble fibre optique pour créer deux voies optiques porteuses d'impulsions optiques de sortie ;
   - des moyens (Dm) pour retarder lesdites impulsions de sortie de dudit ensemble fibre optique sur l'une desdites deux voies de manière à créer une voie signal porteuse d'impulsions optiques signal et une voie de référence porteuse d'impulsions optiques de référence pour générer lesdites zones d'interférences sur ledit modulateur spatial de lumière.

11. Capteur à fibre optique selon la revendication 10, **caractérisé en ce qu'**il comporte en outre :

   - des seconds moyens pouvant être un second modulateur acousto-optique ($MAO_2$) situé en sortie du circulateur (C) et en entrée du coupleur (CPL) permettant de sélectionner des portes de durée $2\Delta L/c$ avec c la vitesse de la lumière dans le vide et $\Delta L/2$ la longueur d'une zone sensible définie entre une position $A_i$ et une position $B_i$ au niveau dudit ensemble fibre optique et référencée depuis ladite première extrémité, pour ne laisser interférer que des ondes rétrodiffusées provenant d'une zone sensible de ladite fibre à la fois ;
   - les moyens pour retarder lesdites impulsions de sortie introduisant une longueur supplémentaire à parcourir $\Delta L$ ;
   - les impulsions étant séparées d'une durée $t_R$, telle que $t_R > 2L/c$, la durée desdites impulsions $t_p$ étant $t_p > \Delta L/c$ et $t_R > t_{off}$ avec $t_{off}$, le temps de réponse des cristaux liquides.

12. Capteur à fibre optique selon la revendication 7 **caractérisé en ce qu'**il comprend en outre :

   - un ensemble laser dit d'écriture comprenant au moins un laser ($SL_2$) émettant une série d'impulsions dites d'écriture à une fréquence de pompe $\omega_p$ et un faisceau laser émettant une série d'impulsions dites d'écriture à une fréquence signal $\omega_s$ différente de la fréquence $\omega_p$ ;
   - le système optique étant configuré :

∘ pour injecter par ladite première extrémité ($E_1$) lesdites séries d'impulsions d'écriture aux fréquences ωp et ωs, inscrivant au moins un élément de réseau Brillouin ($RB_i$) dans ladite fibre optique ;

∘ pour injecter ladite série d'impulsions issues dudit ensemble optique comportant au moins un laser ($SL_1$) émettant à une longueur d'onde λs correspondant à un faisceau laser de lecture à ladite fréquence signal ωs ;

∘ la position ($Z_r$) de l'écriture dudit élément de réseau Brillouin étant référencée par rapport à la seconde extrémité ($E_2$) de ladite fibre et étant réglée par le décalage temporel entre deux impulsions d'écriture aux fréquences $\omega_p$ et $\omega_s$.

13. Capteur à fibre optique selon la revendication 12, **caractérisé en ce que** l'ensemble laser d'écriture comprend :

- ledit laser ($SL_2$) émettant un faisceau laser ;
- des moyens pour diviser ledit faisceau en deux voies ;
- des moyens ($Df$) pour décaler la fréquence pompe $\omega_p$ vers une fréquence signal $\omega_s$ sur l'une des voies ;
- des moyens pour générer des impulsions sur les deux voies optiques décalées en fréquence pouvant être de type modulateurs acousto-optiques ($MOA_3$, $MAO_4$).

14. Capteur à fibre optique distribué selon la revendication 13, **caractérisé en ce que** ledit système optique est configuré pour que ledit faisceau de référence ($F_r$) ou lesdites impulsions de référence ($I_{pri}$) interfère(nt) en entrée dudit modulateur à cristal liquide sans avoir été injecté(es) dans ledit ensemble fibre optique avec lesdites impulsions optiques signal ($I_{psiS}$), issues desdites impulsions optiques injectées puis propagées dans ladite fibre.

15. Capteur à fibre optique distribué selon la revendication 13, **caractérisé en ce que** ledit système optique est configuré pour que ledit faisceau de référence ($F_r$) ou lesdites impulsions de référence ($I_{pri}$) interfère(nt) en entrée dudit modulateur à cristal liquide en ayant été injecté(es) dans ledit ensemble fibre optique avec lesdites impulsions optiques signal ($I_{psiS}$), issues desdites impulsions optiques injectées puis propagées dans ladite fibre.

16. Capteur à fibre optique pour localiser une excitation à proximité d'un ensemble fibre optique selon l'une des revendications 1 à 5 comprenant :

- un ensemble laser configuré pour émettre N faisceaux laser ($Fi$) indicés i avec i > 1 de longueur d'onde respective λi ;
- un ensemble fibre optique comportant N tronçons successifs indicés i, chaque tronçon comprenant un dispositif de réflexion sélectif ($Mi$) d'une longueur d'onde d'émission associée λi, les indices étant repérés par rapport à une extrémité dudit ensemble fibre optique ;
- le système optique générant N faisceaux de référence ($Fri$) indicés i de longueur d'onde d'émission λi à partir d'un faisceau laser ($Fi$) et réalisant N zones d'interférences ($Zi$) indicées i, chaque zone correspondant à l'interférence entre un faisceau de référence ($Fri$) et un faisceau signal ($Fsi$) de même longueur d'onde d'émission λi ;
- au moins un détecteur optique ($PD$) configuré pour détecter N signaux optiques de sortie ($F_{out}i$) indicés i diffractés respectivement par lesdits N hologrammes ;
- une unité de traitement ($UN_{PD}$) adaptée pour identifier le tronçon dudit ensemble fibre situé à proximité de ladite excitation à localiser, à partir des N signaux optiques de sortie ($F_{out}i$) détectés.

17. Capteur à fibre optique pour localiser une excitation à proximité d'un ensemble fibre optique selon la revendication 7 comportant :

- un ensemble laser émettant un faisceau laser continu à une fréquence f ;
- des moyens ($Bf$) de balayage périodique en fréquence de ladite fréquence f dans une bande de fréquence [0, $f_m$] de manière à coder des plans de rétrodiffusion ($Pi$) et correspondant à des longueurs ($Li$) repérés par rapport à une extrémité dudit ensemble fibre optique ;
- des moyens ($Df$) de décalage en fréquence $\Delta f$ du faisceau laser de référence de manière à inscrire un hologramme dans ledit modulateur spatial de lumière à cristal liquide lorsque la fréquence du faisceau de référence coïncide avec la fréquence du faisceau laser signal ;
- une unité de traitement ($UN_{PD}$) adaptée pour identifier la position d'un plan de rétrodiffusion ($Pi$) repéré par rapport à une extrémité dudit ensemble fibre optique.

18. Capteur à fibre optique selon l'une des revendications précédentes, comprenant un modulateur spatial de lumière fonctionnant en réflexion.

**Patentansprüche**

1. Lichtleitfasersensor zum Erkennen einer Erregung in der Nähe einer Lichtleitfaserbaugruppe, wobei die Erregung eine Phasenmodulation eines optischen Signals bewirkt, welche sich in der Lichtleitfaserbaugruppe fortpflanzt, wobei der Sensor Folgendes beinhaltet:

- eine Laserbaugruppe (SL) mit mindestens einem Laser, wobei die Laserbaugruppe konfiguriert ist, um mindestens einen Laserstrahl abzugeben;
- eine Lichtleitfaserbaugruppe (OF), welche ein erstes Ende ($E_1$) und ein zweites Ende ($E_2$) aufweist;
- ein optisches System, konfiguriert zum:

  ◦ Einkoppeln, über das erste oder das zweite Ende, von mindestens einem Teil des Laserstrahls;
  ◦ Empfangen, über das erste Ende, von mindestens einem Signalstrahl (Fs), welcher aus dem eingekoppelten Teil des Laserstrahls stammt, welcher sich in der Lichtleitfaserbaugruppe fortgepflanzt hat;
  ◦ Erzeugen von mindestens einem Referenzstrahl (Fr) anhand des Laserstrahls oder des Signalstrahls;
  ◦ Schaffen von mindestens einer Interferenzzone, welche einer Interferenz zwischen einem Teil des Referenzstrahls und einem Teil des Signalstrahls entspricht;

- eine digitale Holografiebaugruppe, Folgendes beinhaltend:

  ◦ einen räumlichen Flüssigkristall-Lichtmodulator, konfiguriert zum Empfangen eines Teils des Signalstrahls (Fs) und eines Teils des Referenzstrahls (Fr);
  ◦ eine Kamera, konfiguriert zum Empfangen der Interferenzzone, welche eine Interferenzfigur erzeugt, wobei die Interferenzfigur elektrisch an den räumlichen Flüssigkristall-Lichtmodulator adressiert wird, um dort ein ihr entsprechendes Phasenhologramm zu erzeugen;

- mindestens einen optischen Detektor, konfiguriert zum Erkennen eines optischen Ausgangs-Signalstrahls, welcher aus folgenden Schritten resultiert:

  ◦ der Beugung des empfangenen Teils des Signalstrahls und/oder des empfangenen Teils des Referenzstrahls durch das in den räumlichen Flüssigkristall-Lichtmodulator geschriebene Hologramm und
  ◦ der Übertragung des übertragenen Teils des Referenzstrahls und/oder des übertragenen Teils des Signalstrahls durch den räumlichen Flüssigkristall-Lichtmodulator;

- eine Verarbeitungseinheit ($UN_{PD}$) am Ausgang des optischen Detektors zum Verarbeiten des optischen Ausgangs-Signalstrahls ($F_{out}$), welche es ermöglicht, eine Information in Bezug auf die Erregung zu extrahieren.

2. Lichtleitfasersensor nach Anspruch 1, bei welchem die Lichtleitfaserbaugruppe eine Multimode-Baugruppe ist.

3. Lichtleitfasersensor nach einem der Ansprüche 1 oder 2, **dadurch gekennzeichnet, dass** er erste Mittel beinhaltet, welche ein erster akusto-optischer Modulator ($MAO_1$) zum Erzeugen von optischen Impulsen aus dem Laser sein können.

4. Lichtleitfasersensor nach einem der Ansprüche 1 bis 3, bei welchem ein Trennblatt den Signalstrahl und den Referenzstrahl in zwei Teile trennt, wobei ein erster Teil der Strahlen auf die Kamera gerichtet wird, und der zweite Teil der Strahlen auf den räumlichen Flüssigkristall-Lichtmodulator gerichtet wird.

5. Lichtleitfasersensor nach einem der Ansprüche 1 bis 4, beinhaltend eine erste Verarbeitungseinheit ($UN_{CA}$) zum Verarbeiten der Interferenzfigur am Ausgang der Kamera und zum Adressieren der Figur an den räumlichen Flüssigkristall-Lichtmodulator.

6. Lichtleitfasersensor nach einem der Ansprüche 1 bis 5, bei welchem der durch das erste Ende ($E_1$) empfangene Signalstrahl aus einem Strahl strammt, der auf Höhe des zweiten Endes ($E_2$) eingeleitet und in Übertragung in der Lichtleitfaserbaugruppe fortgepflanzt wird.

7. Lichtleitfasersensor nach einem der Ansprüche 1 bis 5, bei welchem der durch das erste Ende ($E_1$) empfangene Signalstrahl aus einem Strahl strammt, der auf Höhe des ersten Endes eingeleitet und in der Lichtleitfaserbaugruppe zurückgestreut wird.

8. Lichtleitfasersensor zum Erkennen einer Erregung in der Nähe einer Lichtleitfaserbaugruppe nach einem der Ansprüche 1 bis 6, bei welchem ein erster Teil des Laserstrahls zeitlich moduliert wird, bevor er in die Lichtleitfaserbaugruppe eingeleitet wird, wobei ein zweiter Teil des Laserstrahls den Referenz-Laserstrahl bildet, ohne zeitlich moduliert zu werden, wobei die sequenzielle Ankunft der Impulse das Lokalisieren der Erregung auf Höhe der Lichtleitfaserbaugruppe ermöglicht.

9. Lichtleitfasersensor zum Erkennen einer Erregung in der Nähe einer Lichtleitfaserbaugruppe nach einem der Ansprüche 1 bis 5, bei welchem der Referenzstrahl (Fr) anhand des Signalstrahls am Ausgang des ersten Endes ($E_1$) erzeugt wird und Mittel zum Erzeugen eines Gangunterschiedes (Dm) am Referenzstrahl beinhaltet.

10. Lichtleitfasersensor nach Anspruch 7, **dadurch gekennzeichnet, dass** er mindestens Folgendes beinhaltet:

   - einen Zirkulator (C), folgendermaßen positioniert:

      ◦ am Ausgang der optischen Baugruppe, welche mindestens einen Laser beinhaltet;
      ◦ am Eingang der Lichtleitfaserbaugruppe (OF);
      ◦ am Eingang des räumlichen Flüssigkristall-Lichtmodulators (SLM);

   - einen Koppler (CPL), welcher sich am Ausgang der Lichtleitfaserbaugruppe befindet, um zwei optische Kanäle zu schaffen, welche optische Ausgangssignale tragen;
   - Mittel (Dm) zum Verzögern der Ausgangsimpulse der Lichtleitfaserbaugruppe auf einem der beiden Kanäle, um so einen Signalkanal zu schaffen, welcher optische Signalimpulse trägt und einen Referenzkanal, welcher Referenz-Signalimpulse trägt, um die Interferenzzonen am räumlichen Lichtmodulator zu erzeugen.

11. Lichtleitfasersensor nach Anspruch 10, **dadurch gekennzeichnet, dass** er zudem Folgendes beinhaltet:

   - zweite Mittel, welche ein zweiter akusto-optischer Modulator ($MAO_2$) sein können, befindlich am Ausgang des Zirkulators (C) und am Eingang des Kopplers (CPL), welche die Auswahl der Gates mit einer Dauer $2\Delta L/c$ ermöglicht, wobei c, die Geschwindigkeit des Lichts im Vakuum und $\Delta L/2$, die Länge einer sensiblen Zone ist, welche zwischen einer Position $A_i$ und einer Position $B_i$ auf Höhe der Lichtleitfaserbaugruppe definiert ist und vom ersten Ende aus referenziert ist, um nur jeweils rückgestreute Wellen, welche von einer sensiblen Zone der Faser stammen, interferieren zu lassen;
   - wobei die Mittel zum Verzögern der Ausgangsimpulse eine zusätzliche zurückzulegende Länge $\Delta L$ einführen;
   - wobei die Impulse um eine Dauer $t_R$ getrennt sind in der Weise, dass $t_R > 2L/c$, wobei die Dauer der Impulse $t_p$ gleich $t_p > \Delta L/c$ und $t_R > t_{off}$ beträgt, wobei $t_{off}$ die Ansprechzeit der Flüssigkristalle ist.

12. Lichtleitfasersensor nach Anspruch 7, **dadurch gekennzeichnet, dass** er zudem Folgendes beinhaltet:

   - eine Laserbaugruppe, genannt Schreibbaugruppe, beinhaltend mindestens einen Laser ($SL_2$), welcher eine Serie von Impulsen, genannt Schreibimpulse, bei einer Pumpfrequenz $\omega_p$ aussendet und einen Laserstrahl, welcher eine Serie von Schreibimpulsen genannten Impulsen bei einer Signalfrequenz $\omega_s$ aussendet, welche sich von der Frequenz $\omega_p$ unterscheidet;
   - wobei das optische System konfiguriert ist:

      ◦ um über das erste Ende ($E_1$) die Serien von Schreibimpulsen bei den Frequenzen $\omega p$ und $\omega s$ einzukoppeln, welche mindestens ein Brillouin-Netzwerkelement ($RB_1$) in die Lichtleitfaser schreiben;
      ◦ um die Impulsserie einzukoppeln, welche aus der Optikbaugruppe stammt, welche mindestens einen Laser ($SL_1$) beinhaltet, welcher mit einer Wellenlänge $\lambda s$ sendet, welche einem Lese-Laserstrahl bei der Signalfrequenz $\omega_s$ entspricht;
      ◦ wobei die Schreib-Position ($Z_r$) des Brillouin-Netzwerkelementes in Bezug auf das zweite Ende ($E_2$) der Faser referenziert ist und durch zeitliche Verschiebung zwischen zwei Schreibimpulsen bei den Frequenzen $\omega_p$ und $\omega_s$ eingestellt wird.

13. Lichtleitfasersensor nach Anspruch 12, **dadurch gekennzeichnet, dass** der Schreib-Laser Folgendes beinhaltet:

   - den Laser ($SL_2$), welcher einen Laserstrahl aussendet;
   - Mittel zum Teilen des Strahls in zwei Kanäle;
   - Mittel (Df) zum Verschieben der Pumpfrequenz $\omega_p$ in Richtung einer Signalfrequenz $\omega_s$ auf einem der Kanäle;
   - Mittel zum Erzeugen von Impulsen auf den beiden in Bezug auf die frequenzverschobenen optischen Kanälen, welche Mittel vom Typ akusto-optischer Modulatoren ($MOA_3$, $MAO_4$) sein können.

14. Verteilter Lichtleitfasersensor nach Anspruch 13, **dadurch gekennzeichnet, dass** das optische System konfiguriert ist, damit der Referenzstrahl ($F_r$) oder die Referenzimpulse ($I_{pri}$) im Eingang des Flüssigkristall-Lichtmodulators, ohne in die Lichtleitfaserbaugruppe eingekoppelt worden zu sein, mit denjenigen optischen Signalimpulsen ($I_{psis}$) interferiert/interferieren, welche den in die Lichtleitfaser eingekoppelten und anschließend darin fortgepflanzten optischen Impulsen entstammen.

**15.** Verteilter Lichtleitfasersensor nach Anspruch 13, **dadurch gekennzeichnet, dass** das optische System konfiguriert ist, damit der Referenzstrahl ($F_r$) oder die Referenzimpulse ($I_{pri}$) im Eingang des Flüssigkristall-Lichtmodulators, nachdem sie in die Lichtleitfaserbaugruppe eingekoppelt wurden, mit denjenigen optischen Signalimpulsen ($I_{psis}$) interferiert/interferieren, welche den in die Lichtleitfaser eingekoppelten und anschließend darin fortgepflanzten optischen Impulsen entstammen.

**16.** Lichtleitfasersensor zum Erkennen einer Erregung in der Nähe einer Lichtleitfaserbaugruppe nach einem der Ansprüche 1 bis 5, Folgendes beinhaltend:

- eine Laserbaugruppe, konfiguriert zum Aussenden von N Laserstrahlen ($F_i$), indexiert mit i, wobei i > 1, mit einer jeweiligen Wellenlänge $\lambda i$;
- eine Lichtleitfaserbaugruppe, beinhaltend N aufeinanderfolgende Abschnitte, indexiert mit i, wobei jeder Abschnitt eine selektive Reflexionsvorrichtung ($M_i$) einer zugehörigen Sendewellenlänge $\lambda i$ beinhaltet, wobei die Indizes in Bezug auf ein Ende der Lichtleitfaserbaugruppe referenziert sind;
- wobei das Optiksystem N Referenzstrahlen ($F_{ri}$) erzeugt, indexiert mit i, mit Sendewellenlänge $\lambda i$ anhand eines Laserstrahls ($F_i$) und N indexierte Interferenzzonen ($Z_i$) schafft, wobei jede Zone einer Interferenz zwischen einem Referenzstrahl ($F_{ri}$) und einem Signalstrahl ($F_{si}$) gleicher Sendewellenlänge $\lambda i$ entspricht;
- mindestens einen optischen Detektor (PD), konfiguriert zum Erkennen von N optischen Ausgangssignalen ($F_{out}i$), indexiert mit i, welche jeweils durch die N Hologramme gebeugt werden;
- eine Verarbeitungseinheit ($UN_{PD}$), angepasst zum Identifizieren des Abschnitts der Faserbaugruppe, welche sich in der Nähe der zu lokalisierenden Erregung befindet, anhand der N erkannten optischen Ausgangssignale ($F_{out}i$).

**17.** Lichtleitfasersensor zum Lokalisieren einer Erregung in der Nähe einer Lichtleitfaserbaugruppe nach Anspruch 7, Folgendes beinhaltend:

- eine Laserbaugruppe, welche einen durchgängigen Laserstrahl bei einer Frequenz f aussendet;
- Mittel (Bf) zum regelmäßigen Frequenzabtasten der Frequenz f in einem Frequenzband [0, $f_m$] in der Weise, dass Rückstreuebenen ($P_i$) codiert werden, welche Längen ($L_i$) entsprechen, welche in Bezug auf ein Ende der Lichtleitfaserbaugruppe referenziert sind;
- Mittel (Df) zum Verschieben in Bezug auf die Frequenz $\Delta f$ des Referenzlaserstrahls in der Weise, dass ein Hologramm in den räumlichen Flüssigkristall-Lichtmodulator geschrieben wird, wenn die Frequenz des Referenzstrahls mit der Frequenz des Signallaserstrahls übereinstimmt;
- eine Verarbeitungseinheit ($UN_{PD}$), geeignet zum Identifizieren der Position einer Rückstreuebene ($P_i$), welche in Bezug auf ein Ende der Lichtleitfaserbaugruppe referenziert ist.

**18.** Lichtleitfasersensor nach einem der vorhergehenden Ansprüche, beinhaltend einen durch Reflexion arbeitenden räumlichen Lichtmodulator.

**Claims**

**1.** Fibre optic sensor for detecting an excitation in proximity to a fibre optic assembly, said excitation inducing a phase modulation of an optical signal propagating in said fibre optic assembly, said sensor comprising:

- a laser assembly (SL) of at least one laser, said laser assembly being configured to emit at least one laser beam;
- a fibre optic assembly (OF) having a first end ($E_1$) and a second end ($E_2$);
- an optical system configured to:

  ∘ inject via said first or said second end, at least one portion of said laser beam;
  ∘ receive via said first end, at least one signal beam (Fs) originating from the portion of the laser beam injected into and propagated in said fibre assembly;
  ∘ generate at least one reference beam (Fr) based on said laser beam or said signal beam;
  ∘ produce at least one interference zone corresponding to the interference between a portion of the reference beam and a portion of the signal beam;

- a digital holography assembly comprising:

  ∘ a liquid-crystal spatial light modulator configured to receive a portion of the signal beam (Fs) and a portion of the reference beam (Fr);
  ∘ a camera configured to receive said interference zone generating an interference pattern, said interference pattern being addressed electrically to said liquid-crystal spatial light modulator in order to create a phase hologram there corresponding to it;

- at least one optical detector configured to detect an output optical signal beam resulting from:

◦ the diffraction of said portion of the signal beam and/or said portion of the reference beam received by the hologram inscribed in said liquid-crystal spatial light modulator and

◦ the transmission of said portion of the reference beam and/or said portion of the signal beam transmitted by said liquid-crystal spatial light modulator;

- a processing unit ($UN_{PD}$), at the output of said optical detector for processing said output optical signal beam ($F_{out}$) for extracting information relative to said excitation.

2. Fibre optic sensor according to claim 1 wherein the fibre optic assembly is multimode.

3. Fibre optic sensor according to one of claims 1 or 2, **characterised in that** it comprises first means which can be a first acousto-optic modulator ($MOA_1$) for generating optical pulses from said laser.

4. Fibre optic sensor according to one of claims 1 to 3 wherein a beam splitter separates the signal beam and the reference beam into two portions, a first portion of said beams being directed to said camera, the second portion of said beams being directed to the liquid-crystal spatial light modulator.

5. Fibre optic sensor according to one of claims 1 to 4, comprising a first processing unit ($UN_{CA}$), for processing at the output of said camera said interference pattern and addressing it to said liquid-crystal spatial light modulator.

6. Fibre optic sensor according to one of claims 1 to 5 wherein the signal beam received by said first end ($E_1$) is from a beam introduced at the level of said second end ($E_2$) and propagated in transmission in said fibre optic assembly.

7. Fibre optic sensor according to one of claims 1 to 5 wherein the signal beam received by said first end ($E_1$) is from a beam introduced at the level of said first end and backscattered in said fibre optic assembly.

8. Fibre optic sensor for locating an excitation in proximity to a fibre optic assembly according to one of claims 1 to 6 wherein a first portion of the laser beam is temporally modulated before being introduced into the fibre optic assembly, a second portion of the laser beam constituting the reference laser beam without being temporally modulated, the sequential arrival of the pulses allowing for location of said excitation at the level of the fibre optic assembly.

9. Fibre optic sensor for locating an excitation in proximity to an fibre optic assembly according to one of claims 1 to 5 wherein the reference beam (Fr) is generated based on said signal beam at the output of said first end ($E_1$) and comprises means for creating a path difference (Dm) in said reference beam.

10. Fibre optic sensor according to claim 7, **characterised in that** it comprises at least:

- a circulator (C) positioned:

◦ at the output of said optical assembly comprising at least one laser;
◦ at the input of the fibre optic assembly (OF);
◦ at the input of said liquid-crystal spatial light modulator (SLM);

- a coupler (CPL) located at the output of said fibre optic assembly for creating two optical channels carrying output optical pulses;
- means (Dm) for delaying said output pulses of said fibre optic assembly in one of said two channels so as to create a signal channel carrying signal optical pulses and a reference channel carrying reference optical pulses to generate said interference zones on said spatial light modulator.

11. Fibre optic sensor according to claim 10, **characterised in that** it further comprises:

- second means which can be a second acousto-optic modulator ($MOA_2$) located at the output of the circulator (C) and at the input of the coupler (CPL) for selecting duration windows $2\Delta L/c$ with c the speed of light in a vacuum and $\Delta L/2$ the length of a sensing zone defined between a position A; and a position $B_1$ at the level of said fibre optic assembly and referenced from said first end, so as to only interfere with the backscattered waves originating from one sensing zone of said fibre at a time;
- means for delaying said output pulses introducing an additional length to travel $\Delta L$;
- the pulses being separated by a duration $t_R$, such that $t_R > 2L/c$, the duration of said pulses $t_p$ being $t_p > \Delta L/c$ and $t_R > t_{off}$ with $t_{off}$, the response time of the liquid crystals.

12. Fibre optic sensor according to claim 7, **characterised in that** it further comprises:

- a laser assembly called writing comprising at least one laser ($SL_2$) emitting a series of pulses called writing pulses at a pump frequency $\omega_p$ and a laser beam emitting a series of pulses called writing pulses at a signal frequency $\omega_s$ different to the frequency $\omega_p$;
- the optical system being configured:

  ∘ to inject via said first end (E$_1$) said series of writing pulses at frequencies $\omega_p$ and $\omega_s$, inscribing at least one Brillouin grating element (RB$_i$) in said optical fibre;
  ∘ to inject said series of pulses from said optical assembly comprising at least one laser (SL$_1$) emitting at a wavelength $\lambda$s corresponding to a reading laser beam at said signal frequency $\omega_s$;
  ∘ the position (Z$_r$) of the writing of said Brillouin grating element being referenced relative to the second end (E$_2$) of said fibre and being regulated by the time shift between two writing pulses at frequencies $\omega_p$ and $\omega_s$.

**13.** Fibre optic sensor according to claim 12, **characterised in that** the writing laser assembly comprises:

  - said laser (SL$_2$) emitting a laser beam;
  - means for dividing said beam into two channels;
  - means (Df) for shifting the pump frequency $\omega_p$ to a signal frequency $\omega_s$ in one of the channels;
  - means for generating pulses in the two frequency-shifted optical channels which can be of the acousto-optical modulator type (MOA$_3$, MOA$_4$).

**14.** Distributed fibre optic sensor according to claim 13, **characterised in that** said optical system is configured so that said reference beam (F$_r$) or said reference pulses (I$_{pri}$) interfere(s) at the input of said liquid-crystal modulator without having been injected into said fibre optic assembly with said signal optical pulses (I$_{psiS}$), from said optical pulses injected into then propagated in said fibre.

**15.** Distributed fibre optic sensor according to claim 13, **characterised in that** said optical system is configured so that said reference beam (F$_r$) or said reference pulses (I$_{pri}$) interfere(s) at the input of said liquid-crystal modulator by having been injected into said fibre optic assembly with said signal optical pulses (I$_{psiS}$), from said optical pulses injected into then propagated in said fibre.

**16.** Fibre optic sensor for locating an excitation in proximity to a fibre optic assembly according to one of claims 1 to 5 comprising:

  - a laser assembly configured to emit N laser beams (Fi) indexed i with i > 1 of respective wavelength $\lambda$i;

- a fibre optic assembly comprising N successive segments indexed i, each segment comprising a device for selectively reflecting (Mi) an associated emission wavelength $\lambda$i, the indices being referenced in relation to one end of said fibre optic assembly;
- the optical system generating N reference beams (Fri) indexed i of the emission wavelength $\lambda$i based on a laser beam (Fi) and producing N interference zones (Zi) indexed i, each zone corresponding to the interference between a reference beam (Fri) and a signal beam (Fsi) of the same emission wavelength $\lambda$i;
- at least one optical detector (PD) configured to detect N output optical signals (F$_{out}$i) indexed i diffracted respectively by said N holograms;
- a processing unit (UN$_{PD}$) adapted to identify the segment of said fibre assembly situated in proximity to said excitation to be located, based on N detected output optical signals (F$_{out}$i).

**17.** Fibre optic sensor for locating an excitation in proximity to an fibre optic assembly according to claim 7 comprising:

  - a laser assembly emitting a continuous laser beam at a frequency f;
  - means (Bf) for periodically frequency scanning of said frequency f in a frequency band [0, f$_m$] so as to code backscattering planes (Pi) and corresponding to the lengths (Li) referenced in relation to one end of said fibre optic assembly;
  - means (Df) for frequency shifting $\Delta$f of the reference laser beam so as to inscribe a hologram in said liquid-crystal spatial light modulator when the frequency of the reference beam coincides with the frequency of the signal laser beam;
  - a processing unit (UN$_{PD}$) adapted to identify the position of a backscattering plane (Pi) referenced in relation to one end of said fibre optic assembly.

**18.** Fibre optic sensor according to one of the previous claims, comprising a spatial light modulator operating in reflection.

## FIG.1

## FIG.2a

FIG.2b

FIG.2c

FIG.3

**FIG.4**

**FIG.5**

EP 3 243 042 B1

**FIG.6**

**FIG.7**

FIG.8a

FIG.8b

**FIG.9**

FIG.10a

FIG.10b

FIG.10c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1302640
- US 4536861 A

**Littérature non-brevet citée dans la description**

- **R. BOUFFARON et al.** All-optical acoustic array for underwater surveillance. *PROCEEDINGS OF SPIE, Volume 8794, paper 8794-36, Fifth European Workshop on Optical Fibre Sensors,* 2013, vol. 8794
- **J. W. GOODMAN ; R. W. LAURENCE.** Digital image formation from electronically detected holograms. *Appl Phys Lett,* 1967, vol. 11, 77
- **U. SHNARS ; W. JUPTNER.** Digital holography. 2005
- **M. GROSS ; M. ATLAN.** Digital holography at shot noise level. *Opt Lett.,* 2007, vol. 32, 909
- **C. BELLANGER ; A. BRIGNON ; J. COLINEAU ; J. P. HUIGNARD.** Coherent fiber combining by digital holography. *Opt Lett.,* 2008, vol. 33, 2937
- **M. PAURISSE ; M. HANNA ; F. DRUON ; P. GEORGES ; C. BELLANGER ; A. BRIGNON ; J. P. HUIGNARD.** Phase and amplitude control of a multimode LMA fiber beam by use of digital holography. *Opt Express,* 2009, vol. 17, 13000
- **M. CUI ; C. YANG.** Implementation of a digital optical phase conjugation system and its application to study the robustness of turbidity suppression by phase conjugation. *Opt Express,* 2010, vol. 18, 3444
- **I. PAPADOPOULOS ; S. FARAHI ; D. PSALTIS ; C. MOSER.** Focussing and scanning light through a multimode optical fiber using digital phase conjugation. *Opt Express.,* 2012, vol. 20, 10583
- **I. PAPADOPOULOS ; O. SIMANDOUX ; S. FARAHI ; J. P. HUIGNARD ; E. BOSSY ; D. PSALTIS ; C. MOSER.** Optical resolution photoacoustic microscopy by use of multimode fiber. *Appl Phys Lett,* 2013, vol. 102, 211106
- **I. PAPADOPOULOS ; S. FARAHI ; D. PSALTIS ; C. MOSER.** High resolution lensless endoscope based on digital scanning through a multimode optical fiber. *Biomed Opt Express,* 2013, vol. 4, 260
- **U. BORTOLOZZO ; S. RESIDORI ; J. P. HUIGNARD.** Beam- Coupling in Photorefractive Liquid Crystal Light- Valves. *J. Phys. D: Appl. Phys.,* 2008, vol. 41, 224007